# EUROPÄISCHE PATENTSCHRIFT

(11) **EP 4 370 401 B1**
(45) Veröffentlichungstag und Bekanntmachung des Hinweises auf die Patenterteilung: **08.10.2025**
(21) Anmeldenummer: 22744188.8
(22) Anmeldetag: 13.07.2022
(51) Int. Cl.: B62B 3/12, B62B 5/06, B60B 33/02, B62K 7/04

(54) **ELEKTRISCH ANTREIBBARER LASTENROLLER**
ELECTRICALLY DRIVEABLE CARGO SCOOTER
TROTINNETTE CARGO À ENTRAÎNEMENT ÉLECTRIQUE

(30) Priorität: 14.07.2021 DE 102021207475
(43) Veröffentlichungstag der Anmeldung: 22.05.2024
(73) Patentinhaber: Riemensperger, Reinhold, 85391 Allershausen (DE)
(72) Erfinder: Riemensperger, Reinhold, 85391 Allershausen (DE)
(74) Vertreter: Müller-Boré & Partner Patentanwälte PartG mbB
(86) Internationale Anmeldenummer: PCT/EP2022/069588
(87) Internationale Veröffentlichungsnummer: WO 2023/285522

(56) Entgegenhaltungen:
- EP-A1- 3 650 325
- WO-A1-2020/127972
- ES-U- 1 262 134
- US-B1- 6 273 206
- US-B1- 6 793 248

## Beschreibung

Die vorliegende Erfindung betrifft einen elektrisch antreibbaren Lastenroller, und offenbart ferner ein Lastenrollersteuerungs- und/oder -regelungssystem, ein Verfahren zur Steuerung und/oder Regelung eines elektrisch antreibbaren Lastenrollers sowie ein Computerprogrammprodukt zur Ausführung des vorgenannten Verfahrens mittels eines Computers.

Aus dem Stand der Technik sind verschiedene Lastenrollervarianten bekannt, welche neben einem Trittbrett und Rollen eine Aufnahmevorrichtung für Lasten, wie beispielsweise einen Koffer oder eine Kofferaufnahme, aufweisen. Solch herkömmliche Rollervarianten machen es sich zur Aufgabe die Mobilität der Menschen auf praktische Weise zu fördern. Ein beispielhafter gattungsgemäßen Lastenroller ist aus PCT/EP2019/086679 bekannt.

PCT/EP2019/086679 beschreibt ein variables Kleinfahrzeug mit Elektroantrieb, das zwischen zwei Zuständen variiert werden kann, nämlich einem Grundzustand, in dem ein Lastbereich und dahinter ein Stehplatz vorgesehen sind, und einem gegenüber dem Grundzustand verkürzter Zustand, in dem entweder der Lastbereich oder der Stehplatz deaktiviert ist. In beiden Zuständen sind lediglich genau zwei Achsen, also eine Vorderachse und eine Hinterachse aktiv am Boden. Offenbart ist weiterhin ein Verfahren zur komfortablen Zustandsänderung des Kleinfahrzeugs.

ES 1 262 134 U beschreibt einen elektrischen Roller für den Lastentransport, der umfasst: ein Rohrchassis mit einer hinteren Plattform, die zum Tragen eines Benutzers konfiguriert ist, und einer vorderen Plattform, die zum Tragen einer Last konfiguriert ist; ein Paar antreibender Vorderräder, die an der vorderen Plattform angebracht sind, wobei die Vorderräder in Bewegungsrichtung fest ausgerichtet sind; mindestens ein hinteres Lenkrad, das an der hinteren Plattform angebracht und mit einer relativ zur vertikal rotierenden Welle gekoppelt ist; einen vertikalen Lenkrahmen, der zwischen der hinteren Plattform und der vorderen Plattform angeordnet ist, wobei der vertikale Lenkrahmen einen Lenker umfasst, der mit einer vertikalen Lenkachse verbunden ist, die wiederum mit der Achse des Hinterrads verbunden ist, so dass, wenn der Benutzer den Lenker dreht, eine Änderung der Ausrichtung des Hinterrads erfolgt, die eine Drehung des Rollers verursacht.

US 6 273 206 B1 beschreibt ein motorgetriebenes zerlegbares Stuhlfahrzeug mit einem Rahmen, der auf Vorder- und Hinterrädern getragen wird. Am vorderen Ende des Rahmens ist eine Lenksäule angebracht und an der Rückseite davon wird ein Sitz getragen. Der Rahmen weist getrennte vordere und hintere Segmente auf, die eine in Längsrichtung teleskopische Kupplungsanordnung enthalten, die aus einem in Längsrichtung teleskopierenden Teil an einem der Segmente besteht, der von einem Aufnahmeteil am anderen Segment aufgenommen wird, und einer Verriegelungsanordnung, die mit einem der Teile verbunden ist und bei einer relativen Teleskopbewegung der Teile automatisch mit dem anderen interagiert und diese in der verriegelten Position verriegelt.

EP 3 650 325 A1 beschreibt ein einsitziges Elektrofahrzeug, bestehend aus einem Fahrgestell, das mindestens drei Räder trägt, die auf zwei Rollbaugruppen verteilt sind, einschließlich einer schwenkbaren Rollbaugruppe, wobei mindestens eine der Rollbaugruppen elektrisch angetrieben ist, einer Plattform zur Aufnahme eines Fahrers; eine Plattform zur Aufnahme einer Last; und einen Ausrichtungsaktuator mit einer Antriebswelle, die durch ein drehbares Verbindungselement drehbar mit der schwenkbaren Rollanordnung verbunden ist und mittels eines Richtungssteuerelements gesteuert wird.

Lastenroller zur Förderung der Mobilität der Zukunft unterliegen vielerlei Anforderungen, die durch ihr konkretes Anwendungsfeld definiert werden, beispielsweise gekennzeichnet dadurch, wer oder was transportiert werden soll, sowie durch die Wege, die für den Transport genutzt werden sollen.

Es ist daher Aufgabe der vorliegenden Erfindung einen Lastenroller bereitzustellen, welcher einer Vielzahl von Anwendungsfeldern zugänglich ist, und einen besonders einfachen sowie zuverlässigen Übergang zwischen unterschiedlichen Transportwegen bzw. - situationen ermöglicht.

Die vorbeschriebene Aufgabe wird durch die Gegenstände der unabhängigen Ansprüche gelöst, bevorzugte Ausführungsformen sind Gegenstand der abhängigen Ansprüche.

Die beanspruchte Erfindung ist durch einen elektrisch antreibbaren Lastenroller nach den beigefügten Ansprüchen 1 bis 15 definiert.

Die beanspruchte Erfindung betrifft einen elektrisch antreibbaren Lastenroller, umfassend:
- eine Vorderachse mit zumindest einem Vorderrad, wobei die Vorderachse an einem Vorderrahmenteil angeordnet ist;
- eine Hinterachse mit zumindest einem Hinterrad, wobei die Hinterachse an einem Hinterrahmenteil angeordnet ist;
   -- wobei der Lastenroller einen kurzen Zustand aufweist, in dem eines von dem Hinterrahmenteil und dem Vorderrahmenteil zumindest abschnittsweise in dem anderen von dem Hinterrahmenteil und dem Vorderrahmenteil angeordnet ist; und
- ein Trittbrett;
dadurch gekennzeichnet, dass
-- das Trittbrett eine Hinterradfreigabeeinrichtung aufweist, welche konfiguriert ist, im kurzen Zustand des Lastenrollers eine Schwenkbarkeit des zumindest einen Hinterrads freizugeben.

Vorteilhafterweise ermöglicht der vorliegende elektrisch antreibbare Lastenroller, dass in einem kurzen Zustand, also insbesondere nach einem Übergang von einem langen Zustand in den kurzen Zustand, indem die Schwenkbarkeit des zumindest einen Hinterrads freigegeben wird, der elektrisch antreibbare Lastenroller besonders wendig ist, und einen besonders geringen Wendekreis aufweist.

Durch die erhöhte Wendigkeit im kurzen Zustand des Lastenrollers, ist der Lastenroller insbesondere geeignet nicht nur eine Last bis an ein Gebäude heran zu transportieren, sondern es bis in das Gebäude hinein zu transportieren, wodurch auch Transportwege bis in Büros oder Wohnflächen für den Lastenroller zugänglich sind, welche beispielsweise über Fahrstühle oder ähnliches führen können.

Unter der Schwenkbarkeit eines Hinterrads ist insbesondere die Drehbarkeit des Hinterrads um seine Hochachse bzw. um eine Achse, um die das Hinterrad für eine Lenkbewegung des Lastenrollers drehbar gelagert ist, zu verstehen.

In beispielhaften Ausführungsformen kann die Schwenkbarkeit des zumindest einen Hinterrads mittels der Hinterradfreigabeeinrichtung des Trittbretts derart freigegeben sein, dass das zumindest eine Hinterrad um zumindest etwa 90°, bevorzugt bis etwa 180°, und besonders bevorzugt um 360° schwenkbar ist. So dass im letzteren Fall, das zumindest eine Hinterrad also vollständig um seine Hochachse schwenkbar bzw. drehbar ist.

Der kurze Zustand des Lastenrollers kann insbesondere ein Zustand sein, in dem der Lastenroller gegenüber einem weiteren Zustand des Lastenrollers, der als langer Zustand bezeichnet werden kann, verkürzt ist, insbesondere in seiner Längsrichtung verkürzt ist. Der kurze Zustand des Lastenrollers kann beispielhaft einen Zustand des Lastenrollers beschreiben, in dem eines von dem Hinterrahmenteil und dem Vorderrahmenteil zumindest abschnittsweise in dem anderen von dem Hinterrahmenteil und dem Vorderrahmenteil angeordnet ist bzw. in dem anderen von dem Hinterrahmenteil und dem Vorderrahmenteil aufgenommen ist. Beispielhaft kann der kurze Zustand des Lastenrollers einem Zustand entsprechen, in dem das Hinterrahmenteil fast vollständig in dem Vorderrahmenteil aufgenommen ist bzw. umgekehrt. Weiterhin kann der lange Zustand des Lastenrollers einem Zustand entsprechen, in dem das Vorderrahmenteil fast vollständig in dem Hinterrahmenteil aufgenommen ist bzw. umgekehrt.

Mit anderen Worten kann der Lastenroller einen Rahmen aufweisen, der ein Vorderrahmenteil und ein Hinterrahmenteil umfasst. Dabei können Vorderrahmenteil und Hinterrahmenteil zueinander verschiebbar angeordnet sein, insbesondere in Längsrichtung des Lastenrollers zueinander verschiebbar angeordnet sein. Beispielhaft können Vorderrahmenteil und Hinterrahmenteil zueinander teleskopartig ausgeführt sein, sind darauf jedoch nicht beschränkt. Insbesondere kann das Vorderrahmenteil und/oder das Hinterrahmenteil konfiguriert sein, jeweils nur einen Abschnitt des jeweils anderen im kurzen Zustand sowie im langen Zustand zumindest abschnittsweise in sich anzuordnen bzw. aufzunehmen.

Indem die Hinterachse an dem Hinterrahmenteil angeordnet ist und die Vorderachse an dem Vorderrahmenteil angeordnet ist, kann der kurze Zustand insbesondere dadurch konfiguriert sein, dass die Hinterachse und die Vorderachse einen verkürzten Abstand zueinander aufweisen, im Vergleich zu einem langen Abstand in einem langen Zustand des Lastenrollers.

In bevorzugten Ausführungsformen kann der kurze Zustand dadurch definiert sein, dass der Abstand zwischen der Hinterachse und der Vorderachse kürzer ist, als ein Abstand zweier Räder, welche an der Vorderachse oder der Hinterachse angeordnet sind. Dadurch kann ein Lastenroller bereitgestellt werden, dessen Wendekreis im kurzen Zustand vorteilhaft klein ist, insbesondere derart klein ist, dass ein Wendekreisradius lediglich bzw. ausschließlich durch den Abstand zwischen zweier Räder definiert ist, welche an der Vorderachse oder an der Hinterachse angeordnet sind. In beispielhaften Ausführungsformen kann der Lastenroller im kurzen Zustand einen Wendekreisradius von unter etwa 1,5 m aufweisen, bevorzugt von unter etwa 1,3 m aufweisen, weiter bevorzugt von etwa 1,1 m aufweisen, und besonders bevorzugt von etwa 1,0 m aufweisen. Die vorgenannten realisierbaren Wendekreisradien stellen beispielhafte Wendekreisradien des vorliegenden erfindungsgemäßen Lastenrollers dar, wobei je nach gewünschten Abmaßen des Lastenrollers auch darüberliegende oder darunterliegende Wendekreise realisierbar sind.

In weiter bevorzugten Ausführungsformen können zwei Räder an einer Achse in entgegengesetzter Richtung antreibbar sein. Beispielsweise können an der Vorderachse des Lastenrollers zwei Räder angeordnet sein, wobei alternativ oder zusätzlich auch an einer Hinterachse zwei Räder angeordnet sein können. Im kurzen Zustand können die zwei Räder dabei so konfiguriert sein, dass eines der zwei Räder nach vorne antreibbar ist und das andere der zwei Räder nach hinten antreibbar ist. Mittels der vorliegenden bevorzugten Ausführungsform, kann ein Wendekreis des Lastenrollers vorteilhaft noch weiter verkleinert werden. So kann im beispielhaften Fall eines erfindungsgemäßen Lastenrollers mit zwei Vorderrädern an einer Vorderachse und einem Hinterrad mit freigegebener Schwenkbarkeit, der Wendekreisradius durch einen Abstand zwischen Achsmittelpunkt der Vorderachse und einem Vorderrad, welches an der Vorderachse angeordnet ist, definiert sein, für den Fall, wenn der Lastenroller im kurzen Zustand derart verkürzt ist, dass der Abstand zwischen Vorderachse und Hinterachse kleiner ist als der Abstand zwischen Vorderachsmittelpunkt und einem Vorderrad. Alternativ kann der Wendekreisradius durch einen Abstand zwischen Vorderachse und Hinterachse definiert sein, für den Fall, wenn der Lastenroller derart verkürzt ist, dass der Abstand zwischen Vorderachse und Hinterachse größer ist als der Abstand zwischen Vorderachsmittelpunkt und einem Vorderrad. Die Antreibbarkeit zweier Räder an einer Achse in entgegengesetzter Richtung kann ein zusätzliches Antriebsverfahren bzw. eine zusätzliche Antriebsmethode darstellen, welches bzw. welche insbesondere ein Wenden des Lastenrollers mit vorteilhaft geringem Platzbedarf unterstützt bzw ermöglicht. Daneben verfügt der Lastenroller über ein normales Antriebsverfahren bzw. eine normale Antriebsmethode, wobei die an einer Achse angeordneten Räder in gleicher Richtung antreibbar sind. Die entgegengesetzte Antreibbarkeit zweier Räder an einer Achse kann beispielsweise mittels Lokalmotoren vorteilhaft ermöglicht werden, wobei beispielsweise jedes Rad mit einem Lokalmotor verbunden ist, der nur das einzelne damit verbundene Rad antreibt. Alternativ oder zusätzlich kann ein Lokalmotor auch konfiguriert sein eine Mehrzahl einzelner Räder anzutreiben.

Gegenüber den Ausführungen bzgl. des Wendekreises des Lastenrollers im kurzen Zustand, kann der erfindungsgemäße Lastenroller im langen Zustand einen Wendekreisradius im Bereich von etwa 1,8 m bis etwa 2,5 m aufweisen, bevorzugt von etwa 2,2 m aufweisen. Dadurch weist der Lastenroller im langen Zustand eine bevorzugt hohe Kurvenfahrstabilität auf, welche einem Benutzer das Fahren bei höheren Geschwindigkeiten, wie beispielsweise im Straßenverkehr, erleichtert.

In beispielhaften Ausführungsformen können das Vorderrahmenteil und das Hinterrahmenteil mittels eines Schienensystems zueinander verschiebbar angeordnet sein.

In alternativen Ausführungsformen des Lastenrollers können das Vorderrahmenteil und das Hinterrahmenteil auch aneinander vorbei geschoben werden, um den Lastenroller von einem langen Zustand in einen kurzen Zustand zu überführen, und umgekehrt.

In bevorzugten Ausführungsformen des Lastenrollers kann das zumindest eine Hinterrad des Lastenrollers im langen Zustand des Lastenrollers eine eingeschränkte Schwenkbarkeit aufweisen, insbesondere bzgl. der Schwenkbarkeit vollständig blockiert sein. In beispielhaften Ausführungsformen kann die Schwenkbarkeit des zumindest einen Hinterrads im langen Zustand des Lastenrollers insbesondere auf einen Bereich bis etwa 15°, bevorzugt bis etwa 8°, weiter bevorzugt bis etwa 3°, noch weiter bevorzugt bis etwa 1°, und besonders bevorzugt um etwa 0° eingeschränkt sein, wobei sich der angegebene Winkelbereich jeweils auf die Schwenkbarkeit bzw. Drehbarkeit um die Hochachse des Hinterrads bzw. um die Achse, um die das Hinterrad drehbar gelagert ist, bezieht.

Die eingeschränkte Schwenkbarkeit des zumindest einen Hinterrads des Lastenrollers erhöht vorteilhaft die Fahrstabilität bei vergleichsweise hohen Geschwindigkeiten des Lastenrollers, wie beispielsweise bei Fahrten auf verkehrsüblichen Straßen für Kraftfahrzeuge.

Durch die Kombination aus freigegebener Schwenkbarkeit des zumindest einen Hinterrads im kurzen Zustand des Lastenrollers und der eingeschränkten Schwenkbarkeit des zumindest einen Hinterrads im langen Zustand des Lastenrollers, wird mit dem vorliegenden Lastenroller ein vorteilhaftes System zum einerseits schnellen Transport auf Straßen und andererseits wendigen Transport in Gebäuden ermöglicht. Damit können beispielsweise Güter oder Menschen mit hoher zeitlicher Effizienz und mit einer für den Benutzer vorteilhaften Ergonomie transportiert werden.

In beispielhaften Ausführungsformen des Lastenrollers kann die Hinterradfreigabeeinrichtung einen Vorsprung bilden, der vorzugsweise konfiguriert ist, sich in einem kurzen Zustand des Lastenrollers durch eine Öffnung oder Klappe hin zum zumindest einen Hinterrad zu erstrecken und mit einer Hinterradsicherungseinrichtung derart zusammenwirken, dass die Schwenkbarkeit des zumindest einen Hinterrads freigegeben ist. Die Schwenkbarkeit des Hinterrads kann insbesondere dadurch freigegeben werden, dass eine Verriegelung des Hinterrads weggeklappt wird. Die Hinterradfreigabeeinrichtung kann zum Beispiel durch einen sich von einer Unterseite des Trittbretts erstreckender Vorsprung sein, welcher bevorzugt eine Rolle, ein Rad, eine Kugel oder anderes gleitgeeignetes bzw. rollgeeignetes Element aufweist. Das gleitgeeignete bzw. rollgeeignete Element kann dabei bevorzugt an einem gegenüber dem Trittbrett distalen Ende des Vorsprungs angeordnet sein.

Durch die Bereitstellung der Hinterradfreigabeeinrichtung als Vorsprung, wird die Hinterradfreigabeeinrichtung vorteilhaft als passiv wirkendes Element ausgebildet, welches die Freigabe der Schwenkbarkeit des zumindest einen Hinterrads auf passive Weise, insbesondere durch die Positionierung des Trittbretts in einem nach oben verschwenkten Zustand und durch das Zusammenschieben des Vorderrahmenteils mit dem Hinterrahmenteil, bewirkt.

In weiteren beispielhaften Ausführungsformen des Lastenrollers kann das Trittbrett im langen Zustand des Lastenrollers insbesondere in einer fahrgeeigneten Position sein bzw. in einer fahrgeeigneten Position an den Rahmenteilen angeordnet sein. Mit anderen Worten kann das Trittbrett im langen Zustand in etwa horizontal positioniert sein bzw. sich in einer Position befinden, die es erlaubt, dass sich ein Benutzer des Lastenrollers beim Benutzen desselben darauf stellt.

Demgegenüber kann das Trittbrett im kurzen Zustand des Lastenrollers insbesondere hochgeklappt bzw. verschwenkt positioniert sein bzw. sich in einer Position befinden, die es nicht erlaubt, dass sich ein Benutzer des Lastenrollers beim Benutzen desselben darauf stellt. Die hochgeklappte Position kann insbesondere eine um einen Winkel von etwa 60° bis etwa 100° gegenüber der Längsrichtung des Lastenrollers aufwärts geklappte Position sein, beispielsweise eine in etwa vertikale Position sein, und darüber hinaus einer Position entsprechen, in der das Trittbrett in etwa parallel zu einer Lenkvorrichtung des Lastenrollers ist.

Die Hinterradfreigabeeinrichtung kann insbesondere an einer Unterseite des Trittbretts angeordnet sein. Im langen Zustand des Lastenrollers, also insbesondere, wenn sich das Trittbrett in einer fahrgeeigneten Position befindet, kann die Hinterradfreigabeeinrichtung in einer Ausnehmung des Hinterrahmenteils des Lastenrollers angeordnet sein, wobei die Ausnehmung vorzugsweise einen Rampenabschnitt aufweisen kann. Die Ausnehmung des Hinterrahmenteils des Lastenrollers kann die Hinterradfreigabeeinrichtung im langen Zustand dabei vorteilhaft einhausen und gegenüber der Fahrbahnseite abgrenzen, so dass die Hinterradfreigabeeinrichtung während der Fahrt mit dem Lastenrollers geschützt ist.

Der Übergang des Trittbretts zwischen der fahrgeeigneten Position und der hochgeklappten Position kann insbesondere mittels einer mechanischen und/oder hydraulischen Klappvorrichtung erfolgen.

Zusätzlich oder alternativ kann der Übergang des Trittbretts zwischen der fahrgeeigneten Position und der hochgeklappten Position insbesondere durch ein manuelles Klappen bzw. Schwenken, insbesondere um eine Querachse, erfolgen.

Beim Klappen können der Rampenabschnitt des Hinterrahmenteils und die Hinterradfreigabeeinrichtung derart stützend zusammenwirken, dass nur eine verringerte Kraft, insbesondere zum Hochklappen des Trittbretts, aufgewendet werden muss.

Sowohl durch die mechanische und/oder hydraulische Klappvorrichtung, als auch durch das Zusammenwirken des Rampenabschnitts mit der Hinterradfreigabeeinrichtung kann ein einfacher sowie ergonomischer Übergang zwischen der fahrgeeigneten Position und der hochgeklappten Position des Trittbretts sichergestellt werden.

In beispielhaften Ausführungsformen des Lastenrollers kann ein Übergang zwischen dem langen Zustand und dem kurzen Zustand des Lastenrollers durch das Feststellen des zumindest einen Vorderrads der Vorderachse und das gleichzeitige Antreiben des zumindest einen Hinterrads der Hinterachse erfolgen, oder durch das Feststellen des zumindest einen Hinterrads der Hinterachse und das gleichzeitige Antreiben des zumindest einen Vorderrads der Vorderachse erfolgen, wodurch für den Benutzer jeweils ein besonders einfacher und ergonomischer Übergang zwischen dem langen Zustand und dem kurzen Zustand des Lastenrollers bereitgestellt wird.

In besonders bevorzugten Ausführungsformen des Lastenrollers kann der Übergang von dem langen Zustand hin zum kurzen Zustand zumindest abschnittsweise zeitlich parallel zum Übergang des Trittbretts von der fahrgeeigneten Position hin zur hochgeklappten Position erfolgen. Dies ermöglicht einen besonders zeitsparenden Zustandswechsel des Lastenrollers beim Übergang von einem Transportweg hin zu einem anderen Transportweg, wie beispielsweise von der Anfahrt an ein Gebäude im langen Zustand hin zum Betreten eines Gebäudes im kurzen Zustand oder umgekehrt.

In beispielhaften Ausführungsformen kann der vorgenannte Übergang zwischen langem und kurzen Zustand, der zumindest abschnittsweise zeitlich parallel zum Übergang des Trittbretts erfolgt, durch Feststellen des zumindest einen Vorderrads und Antreiben des zumindest einen Hinterrads erfolgen, oder umgekehrt, wobei durch das Verschieben des Hinterrahmenteils und des Vorderrahmenteils zueinander der Rampenabschnitt derart gegen die Hinterradfreigabeeinrichtung gedrückt wird, dass das Trittbrett geführt hochgeklappt wird. Dadurch lässt sich vorteilhaft ein sowohl zeitsparender als auch ergonomischer Übergang zwischen dem langen und kurzen Zustand des Lastenrollers realisieren.

Darüber hinaus kann der Übergang von einem langen Zustand hin zu einem kurzen Zustand insbesondere verhindert bzw. blockiert sein, so lange das Trittbrett in einer fahrgeeigneten Position für den Benutzer festgelegt ist. Der Übergang von einem langen Zustand des Lastenrollers hin zu einem kurzen Zustand des Lastenrollers kann beispielsweise einen vorhergehenden Schritt des Lösens der Festlegung des Trittbretts, beispielsweise von dem Hinterrahmenteil, erfordern.

Im Folgenden werden verschiedene Begriffe wiederholt verwendet, deren Verständnis durch die nachfolgenden Definitionen erleichtert werden soll.

Elektrischer antreibbarer Lastenroller: Mit elektrisch antreibbarem Lastenroller ist vorliegend insbesondere ein rollerähnliches Gefährt bzw. Fahrzeug zu verstehen, welches zumindest ein Vorderrad, bevorzugt zwei Vorderräder, und ein Hinterrad aufweist, welches geeignet ist Lasten zu transportieren, beispielsweise in Form von anderen Personen bzw. Beifahrern, Paketen, Lebensmitteln oder sonstigen Gütern, und welches insbesondere zumindest einen Elektromotor als Antrieb hat. Nichtdestotrotz sind die vorliegenden Aspekte und Ausführungsformen nicht auf einen Lastenroller beschränkt, der explizit zumindest einen Elektromotor als Antrieb haben muss. Vielmehr kann der Lastenroller grundsätzlich beispielsweise auch durch einen Verbrennungsmotor oder eine Brennstoffzelle antreibbar sein. Der Lastenroller, der zumindest einen Elektromotor aufweist, ist jedoch dahingehend vorteilhaft, dass er auf einfache Weise, beispielsweise an einer Steckdose, aufgeladen werden kann oder mittels zügigen Akkuwechsels betriebsbereit gemacht werden kann. Ferner erlaubt der Lastenroller, welcher einen Elektromotor als Antrieb aufweist, dass keine Abgase bei der Fahrt entstehen, und der Lastenroller dadurch insbesondere für den Betrieb bzw. für das Zurücklegen von Transportwegen in geschlossenen Gebäuden, wie insbesondere Büroflächen oder Wohnflächen, geeignet ist. Sollte vorstehend und im Weiteren vom "Lastenroller" die Rede sein, ohne weiteren Hinweis auf den Antrieb, ist dabei vom Begriff des "elektrisch antreibbaren Lastenrollers" auszugehen.

Längsrichtung: Die Längsrichtung beschreibt eine Richtung, welche im Wesentlichen der Bewegungsrichtung des Lastenrollers bei einer etwa geraden Vorwärtsfahrt entspricht. Die Längsrichtung kann dadurch im Wesentlichen einer Richtung des Lastenrollers von hinten nach vorne, entlang eines Abstands zwischen der Hinterachse und der Vorderachse des Lastenrollers entsprechen. Die Fahrtrichtungen vorwärts und rückwärts sind insbesondere in etwa parallel zur Längsrichtung des Lastenrollers, wobei die Fahrtrichtung vorwärts der Längsrichtung entsprechen kann, und die Fahrtrichtung rückwärts parallel entgegengesetzt zur Längsrichtung sein kann. Die Längsrichtung kann beispielsweise auch eine Richtung kennzeichnen, in der ein Vorderrahmenteil und ein Hinterrahmenteil des Lastenrollers zueinander verschiebbar sind.

Höhenrichtung: Die Höhenrichtung steht im Allgemeinen senkrecht auf die Längsrichtung und entspricht im Wesentlichen einer Normalen auf einem gedachten Untergrund, auf dem der Lastenroller bewegbar ist.

Breitenrichtung: Die Breitenrichtung steht im Allgemeinen im Wesentlichen senkrecht auf die Längsrichtung und die Höhenrichtung. Die Breitenrichtung kann insbesondere in etwa einer Richtung entsprechen, in der sich eine Vorderachse und/oder eine Hinterachse des Lastenrollers erstreckt. Die Breitenrichtung kann im Weiteren auch als Querrichtung bezeichnet sein bzw. als quer verlaufende Richtung. Weiterhin können verschiedene Querachsen sich insbesondere im Wesentlichen in Breitenrichtung erstrecken.

Die Höhenrichtung, die Breitenrichtung und die Längsrichtung können ein Koordinatensystem, insbesondere ein Rechtssystem bilden. Die genannten Richtungen haben keinen besonderen Ursprung an dem Lastenroller und bringen die damit bezeichneten Elemente bzw. Teile vielmehr in Bezug zueinander.

Wendekreis: Der Wendekreis stellt den kleinsten Kreis bezogen auf ein am weitesten ins Kurvenäußere herausragenden Element des Lastenrollers dar, in dem der Lastenroller eine Kreisfahrt durchführen kann. Mit anderen Worten stellt der Wendekreis einen Kreis dar, den der Lastenroller mit keinem Element nach außen überragt, wenn der Lastenroller mittels engstmöglicher Kreisfahrt eine Fahrtrichtung einnimmt, welche um 180° zu einer bisherigen Fahrtrichtung vor einem Wenden bzw. vor einem Befahren des engstmöglichen Kreises verdreht ist. Mit Wendekreis ist insbesondere auch ein Durchmesser eines Wendekreises gemeint. Der Wendekreisradius bezeichnet die Hälfte des Wendekreises bzw. des Wendekreisdurchmessers.

Wird eine Richtung oder ein Winkel mit dem Zusatz "im Wesentlichen" oder "in etwa" wiedergegeben, so sei mit diesem Zusatz insbesondere eine Abweichung von der betreffenden Richtung bzw. vom betreffenden Winkel im Bereich von 0° bis 5° gemeint bzw. zu verstehen.

Wird ein räumliches Maß, ein räumliches Verhältnis oder ein sonstiges Verhältnis mit dem Zusatz "im Wesentlichen" oder "in etwa" wiedergegeben, so sei mit diesem Zusatz insbesondere eine Abweichung von dem betreffenden Maß bzw. dem betreffenden Verhältnis im Bereich von 0 % bis 10 % gemeint bzw. zu verstehen.

In bevorzugten Ausführungsformen des elektrisch antreibbaren Lastenrollers kann das Hinterrahmenteil eine rückstellfähig auslenkbare Hinterradsicherungseinrichtung aufweisen, welche das zumindest eine Hinterrad in einem langen Zustand des Lastenrollers gegen ein Verschwenken sichert.

Durch die rückstellfähig auslenkbare Hinterradsicherungseinrichtung wird vorteilhaft auf passive Weise eine Sicherung des Hinterrads gegen ein Verschwenken bzw. gegen ein Verdrehen des Hinterrads um seine Hochachse bereitgestellt. Durch die Sicherung des Hinterrads gegen ein Verschwenken wird weiter insbesondere die Fahrstabilität und Fahrsicherheit des Lastenrollers bei höheren Geschwindigkeit, wie beispielsweise auf verkehrsüblichen Straßen für Kraftfahrzeuge, vorteilhaft erhöht.

In bevorzugten Ausführungsformen des elektrisch antreibbaren Lastenrollers kann das Trittbrett im kurzen Zustand des Lastenrollers gegenüber dem langen Zustand des Lastenrollers verschwenkt sein, und
kann die Hinterradfreigabeeinrichtung des Trittbretts im kurzen Zustand des Lastenrollers konfiguriert sein, die rückstellfähig auslenkbare Hinterradsicherungseinrichtung auszulenken, um die Schwenkbarkeit des Hinterrads freizugeben.

Mit anderen Worten kann das Trittbrett im kurzen Zustand des Lastenrollers gegenüber dem langen Zustand des Lastenrollers geklappt, insbesondere hochgeklappt bzw. nach oben geschwenkt sein, so dass die Hinterradfreigabeeinrichtung die rückstellfähig auslenkbare Hinterradsicherungseinrichtung derart auslenkt, dass die Schwenkbarkeit bzw. Drehbarkeit des Hinterrads um seine Hochachse freigegeben ist.

Die Verknüpfung des verschwenkten bzw. hochgeklappten Zustands des Trittbretts mit dem kurzen Zustand des Lastenrollers, so dass die Schwenkbarkeit des zumindest einen Hinterrads freigegeben ist, ermöglicht einerseits vorteilhaft, dass der Lastenroller in seinem kurzen Zustand zusätzlich besonders wendig und platzsparend gelenkt werden kann, und andererseits vorteilhaft, dass der Lastenroller in seinem langen Zustand, in dem die rückstellfähig auslenkbare Hinterradsicherungseinrichtung die Schwenkbarkeit des zumindest einen Hinterrads einschränkt, eine besonders hohe Fahrstabilität und Fahrsicherheit für den Benutzer aufweist.

Mit anderen Worten ermöglicht der vorliegende Lastenroller vorteilhaft, dass insbesondere zwei zueinander konträre Transportsituationen, wie die Straßenfahrt einerseits und der Transport innerhalb von Gebäuden andererseits, auf vorteilhaft sichere und ergonomische Weise verknüpft bzw. vereint werden können.

In bevorzugten Ausführungsformen des elektrisch antreibbaren Lastenrollers kann die rückstellfähige Hinterradsicherungseinrichtung ein rückstellfähig klappbares Nutelement aufweisen,
wobei ein Sicherungsvorsprung an dem zumindest einen Hinterrad angeordnet ist, und
wobei im langen Zustand des Lastenrollers der Sicherungsvorsprung zumindest abschnittsweise in das rückstellfähig klappbare Nutelement eingreift.

In alternativen Ausführungsformen des Lastenrollers kann die rückstellfähige Hinterradsicherungseinrichtung einen rückstellfähig klappbaren Sicherungsvorsprung aufweisen,
wobei ein Nutelement an dem zumindest einen Hinterrad angeordnet ist, und
wobei im langen Zustand des Lastenrollers der rückstellfähig klappbare Sicherungsvorsprung in das Nutelement eingreift.

Die Anordnung eines rückstellfähig klappbaren Elements und eines mit dem Hinterrad gekoppelten Elements aus einer Nut und eines darin zumindest abschnittsweise eingreifenden Vorsprungs ermöglicht vorteilhaft eine einfache, passive, mechanisch sichere Festlegung des Hinterrads im langen Zustand des Lastenrollers.

Das rückstellfähig klappbare Nutelement bzw. der rückstellfähig klappbare Sicherungsvorsprung kann beispielsweise eine Federanordnung, bevorzugt eine Drehfederanordnung aufweisen, die eine rückstellfähige bzw. elastische Drehung bzw. Rotation des jeweiligen Elements um eine Querrichtung bzw. Breitenrichtung des Lastenrollers erlaubt. Die rückstellfähige Hinterradsicherungseinrichtung ist jedoch nicht darauf beschränkt.

So kann im kurzen Zustand des Lastenrollers die Hinterradfreigabeeinrichtung insbesondere konfiguriert sein, sich durch eine Klappöffnung bzw. Hinterradöffnung hindurch zu erstrecken, um beispielsweise das rückstellfähig klappbare Nutelement rückstellfähig auszulenken, um einen Eingriff zwischen Nutelement und Sicherungsvorsprung zu lösen, und die Schwenkbarkeit des zumindest einen Hinterrads freizugeben. Weiterhin kann im langen Zustand des Lastenrollers die Hinterradfreigabeeinrichtung insbesondere konfiguriert sein, sich nicht durch die Klappöffnung bzw. Hinterradöffnung hindurch zu erstrecken, so dass das Nutelement und der Sicherungsvorsprung, durch die rückstellfähige Ausbildung in Eingriff bleiben, und die Schwenkbarkeit des zumindest einen Hinterrads blockieren bzw. einschränken.

In beispielhaften Ausführungsformen kann die Nut insbesondere als sich kegelförmig bzw. dreiecksförmig öffnende Nut ausgebildet sein, um bei einem Übergang vom kurzen Zustand in den langen Zustand des Lastenrollers ein Eingreifen ineinander vorteilhaft zu erleichtern bzw. sicherzustellen.

Zusätzlich oder alternativ kann der Sicherungsvorsprung bzw. das Nutelement mittels einer drehbaren Hinterradaufhängung an dem zumindest einen Hinterrad angeordnet sein. Bevorzugt können dabei der Sicherungsvorsprung bzw. das Nutelement bzgl. einer Drehachse bzw. Hochachse der drehbaren Hinterradaufhängung auf der gleichen Seite angeordnet sein, wie der Hinterradmittelpunkt.

Im Folgenden wird kurz auf die beispielhafte Ausführungsform eingegangen, wobei die rückstellfähige Hinterradsicherungseinrichtung ein Nutelement aufweist, und wobei ein Sicherungsvorsprung an dem Hinterrad bzw. an der drehbaren Hinterradaufhängung angeordnet ist. In alternativen Ausführungsformen kann die rückstellfähige Hinterradsicherungseinrichtung einen Sicherungsvorsprung aufweisen, und ein Nutelement an dem Hinterrad bzw. an der drehbaren Hinterradaufhängung angeordnet sein. Die vorgenannte Ausrichtung bzgl. der Drehachse der Hinterradaufhängung ermöglicht vorteilhaft, dass sich bei einer Bewegung des Hinterrads in Fahrtrichtung rückwärts, das Hinterrad automatisch derart ausrichtet, dass sich der Hinterradmittelpunkt in Fahrtrichtung vorwärts vor der Drehachse der Hinterradaufhängung ist, also der Hinterradmittelpunkt bzgl. der Drehachse der Hinterradaufhängung weiter in Fahrtrichtung vorne ausgerichtet ist, und insbesondere automatisch in etwa entlang der Längsrichtung des Lastenrollers ausgerichtet ist, da dies die stabile Position des zumindest einen Hinterrads bei einer Bewegung des Hinterrads in Fahrtrichtung nach hinten ist. Dadurch wird im Weiteren ermöglicht, dass bei einer Bewegung des Hinterrads in Fahrtrichtung rückwärts, der Sicherheitsvorsprung, welcher an der drehbaren Hinterradaufhängung angeordnet ist, dem vorderen Bereich des Lastenrollers zugewandt positioniert bzw. ausgerichtet ist. Somit wird bei einer Bewegung des Hinterrads in Fahrtrichtung rückwärts vorteilhaft ermöglicht, dass beim zurückstellenden Klappen des rückstellfähig klappbaren Nutelements, die eingreifenden Elemente sicher und zuverlässig zueinander ausgerichtet sind, und beim Erreichen des langen Zustands des Lastenrollers in Eingriff gelangen.

In bevorzugten Ausführungsformen des elektrisch antreibbaren Lastenrollers kann ein Hinterradschwenksensor im Bereich des rückstellfähig klappbaren Nutelements angeordnet sein und konfiguriert sein, ein zumindest abschnittsweises Eingreifen des Sicherungsvorsprungs zu detektieren und/oder ein Nicht-Eingreifen des Sicherungsvorsprungs zu detektieren.

Durch die Detektion des zumindest abschnittsweisen Eingreifens bzw. des Nicht-Eingreifens zwischen der rückstellfähigen Hinterradsicherungseinrichtung und des komplementären Elements, welches an dem Hinterrad angeordnet ist, kann vorteilhaft ein Hinterradzustandssignal erzeugt werden. Nach Auswertung des Hinterradzustandssignal durch ein Lastenrollersteuerungs- und/oder -regelungssystem, kann ein Antriebssteuerungs- bzw. -regelungsbefehl ausgegeben werden, der eine vorbestimmte Beschleunigung und/oder Geschwindigkeit der Vorderachse und/oder der Hinterachse freigibt oder festlegt. Dabei kann für den Fall des Eingreifens insbesondere eine vorbestimmte Beschleunigung und/oder Geschwindigkeit freigegeben werden. Stattdessen kann für den Fall des Nicht-Eingreifens eine vorbestimmte Beschleunigung und/oder Geschwindigkeit nicht freigegeben werden, insbesondere blockiert oder begrenzt werden. Somit kann wiederum vorteilhaft verhindert werden, dass der Lastenroller über ein bestimmtes Maß hinaus beschleunigt wird, oder auch verhindert werden, dass der Lastenroller überhaupt beschleunigt wird, wenn die rückstellfähige Hinterradsicherungseinrichtung und das dazu komplementäre Element nicht in Eingriff sind, was wiederum die Benutzersicherheit, insbesondere bei einem Übergang zwischen dem langen und kurzen Zustand, erhöht.

In beispielhaften Ausführungsformen des Lastenrollers kann der Hinterradschwenksensor insbesondere einen Näherungssensor aufweisen bzw. sein, welcher konfiguriert ist, die Näherung des Sicherungsvorsprungs zu detektieren.

Dazu kann der Hinterradschwenksensor bevorzugt fixiert, relativ zu einer vorbestimmten Eingriffsposition im Nutelement, angeordnet sein.

Alternativ oder zusätzlich kann der Hinterradschwenksensor einen Kontaktsensor, einen optischen Sensor, einen Federsensor, einen Magnetsensor, einen Ultraschallsensor und/oder einen Hallsensor aufweisen bzw. ein solcher Sensor sein.

So können insbesondere Lastenroller, welche erhöhten Sicherheitsbestimmungen genügen müssen, aufgrund des transportierten Guts bzw. der transportierten Person oder aufgrund möglicher Zulassungsbestimmungen, durch die Ausbildung des Hinterradschwenksensor als mehrere Sensoren verschiedenen Typs, mit einer sicherheitssteigernden Redundanz versehen werden.

In bevorzugten Ausführungsformen des elektrisch antreibbaren Lastenrollers kann das Hinterrahmenteil eine Klappöffnung aufweisen, welche im langen Zustand des Lastenrollers durch einen Betätigungsabschnitt der rückstellfähig auslenkbaren Hinterradsicherungseinrichtung verschlossen ist.

Der Betätigungsabschnitt der rückstellfähig auslenkbaren Hinterradsicherungseinrichtung wirkt dadurch vorteilhaft als verschließendes Element, im langen Zustand des Lastenrollers, welches eine Verschmutzung des Benutzers, verursacht durch das Hinterrad in Zusammenwirkung mit dem befahrenen Untergrund, verhindert. Gleichzeitig wirkt die Hinterradsicherungseinrichtung integral als Aktuator, welcher durch die Hinterradfreigabeeinrichtung betätigt werden kann, wobei durch die Betätigung eine rückstellfähige und/oder elastische Auslenkung der Hinterradsicherungseinrichtung bewirkt wird. Durch die integrale Funktionalität des Betätigungsabschnitts der rückstellfähig auslenkbaren Hinterradsicherungseinrichtung wird wiederum eine besonders einfache und ressourcenschonende Herstellung des vorliegenden Lastenrollers ermöglicht.

In beispielhaften Ausführungsformen des Lastenrollers kann der Betätigungsabschnitt beispielhaft durch ein Betätigungsblech gebildet sein, welches einstückig mit dem Nutelement bzw. mit dem Sicherungsvorsprung ausgebildet ist, und welches insbesondere einfach oder mehrfach gebogen ausgebildet sein kann.

In bevorzugten Ausführungsformen des elektrisch antreibbaren Lastenrollers kann das Trittbrett zumindest ein Festlegungselement aufweisen, welches konfiguriert ist, mit zumindest einem Festlegungsgegenelement des Hinterrahmenteils in Eingriff zu gelangen und den langen Zustand des Lastenrollers zu sichern bzw. zu fixieren.

Indem das Trittbrett zumindest ein Festlegungselement aufweist, welches konfiguriert ist, mit einem Festlegungsgegenelement den langen Zustand des Lastenrollers zu sichern bzw. zu fixieren, werden ihm integral Funktionen verliehen, welche einerseits den langen Zustand stabilisiert bzw. versteifen, wodurch der Lastenroller im langen Zustand eine verbesserte Fahrdynamik aufweist, und andererseits insbesondere verhindern, dass der Lastenroller während der Fahrt bei der ein Benutzer auf dem Trittbrett steht, versehentlich in den kurzen Zustand übergeht.

In beispielhaften Ausführungsformen kann das zumindest eine Festlegungselement als Stabelement ausgebildet sein, welches konfiguriert ist, in eine Festlegungsausnehmung, wie beispielsweise eine Nut als Festlegungsgegenelement, klemmend bzw. unter Vorspannung einzugreifen. In alternativen Ausführungsformen kann das zumindest eine Festlegungselement nutförmig ausgebildet sein, und das Festlegungsgegenelement stabförmig ausgebildet sein, wobei noch weitere davon abweichende Ausführungsformen möglich sind. So kann das ggf. stabförmig ausgebildete Festlegungselement oder Festlegungsgegenelement beispielsweise ein Metallstab, insbesondere ein Edelstahlstab oder Aluminiumstab sein, der beispielsweise eine runde, eine ovale, oder eine beliebig vieleckige Form aufweist.

In weiteren bevorzugten Ausführungsformen des Lastenrollers kann die Hinterradfreigabeeinrichtung ein Gleitelement oder Rollelement aufweisen, das bevorzugt an dessen distalem, von dem Trittbrett abgewandten Ende, angeordnet ist.

Vorteilhaft ermöglicht die Anordnung eines Gleitelements oder Rollelements an der Hinterradfreigabeeinrichtung, dass das Klappen des Trittbretts, insbesondere durch eine hinterrahmenteilseitige Abstützung mittels eines Rampenabschnitts, erleichtert wird.

Darüber hinaus ermöglicht die Anordnung eines Gleitelements oder Rollelements an der Hinterradfreigabeeinrichtung, dass das Betätigen des rückstellfähig auslenkbaren Hinterradsicherungseinrichtung besonders verschleißarm realisiert werden kann, was die Langlebigkeit und Zuverlässigkeit des Lastenrollers als Ganzes erhöht bzw. verbessert.

Ein weiterer elektrisch antreibbarer Lastenroller gemäß der beanspruchten Erfindung umfasst:
- eine Vorderachse mit zumindest einem Vorderrad, wobei die Vorderachse an einem Vorderrahmenteil angeordnet ist, und wobei das zumindest eine Vorderrad schwenkbar an dem Vorderrahmenteil angeordnet ist;
- eine Hinterachse mit zumindest einem Hinterrad, wobei die Hinterachse an einem Hinterrahmenteil angeordnet ist;
   -- wobei der Lastenroller einen kurzen Zustand aufweist, in dem eines von dem Hinterrahmenteil und dem Vorderrahmenteil zumindest abschnittsweise in dem anderen von dem Hinterrahmenteil und dem Vorderrahmenteil angeordnet ist; dadurch gekennzeichnet, dass
   -- im kurzen Zustand des Lastenrollers die Schwenkbarkeit des zumindest einen Vorderrads eingeschränkt ist, insbesondere blockiert ist, bevorzugt mechanisch blockiert ist.

Der bzw. die vorhergenannten elektrisch antreibbaren Lastenroller sowie deren bevorzugte, beispielhafte und alternative Ausführungsformen beziehen sich gleichermaßen auf den vorliegenden elektrisch antreibbaren Lastenroller.

Die eingeschränkte Schwenkbarkeit des zumindest einen Vorderrads des Lastenrollers erhöht vorteilhaft die Lenkbarkeit für einen Benutzer insbesondere bei einem Schieben des Lastenrollers, ähnlich zum Schieben eines Einkaufswagens, und erhöht dadurch die Wendigkeit des Lastenrollers im kurzen Zustand, wie insbesondere für den Transport innerhalb von Gebäuden oder um den Lastenroller zu wenden.

In beispielhaften Ausführungsformen des Lastenrollers kann dieser genau zwei Vorderräder aufweisen, welche in einer Breitenrichtung entlang der Vorderachse beabstandet zueinander angeordnet sind, so dass die eingeschränkte bzw. blockierte Schwenkbarkeit insbesondere eine Drehung des Lastenrollers im kurzen Zustand, um den Vorderachsmittelpunkt als Drehmittelpunkt ermöglicht. Dadurch ist vorteilhaft ein besonders kleiner bzw. enger Wendekreis für den Lastenroller realisierbar. Die Drehung des Lastenrollers kann weiter insbesondere durch eine gleichzeitig freigegebene Schwenkbarkeit des zumindest einen Hinterrads gefördert werden, wie bereits weiter oben beschrieben.

Unter der Schwenkbarkeit eines Vorderrads ist insbesondere die Drehbarkeit des Vorderrads um seine Hochachse bzw. eine Achse, um die das Vorderrad für eine Lenkbewegung drehbar gelagert ist, zu verstehen.

In beispielhaften Ausführungsformen kann die Schwenkbarkeit des zumindest einen Vorderrads, insbesondere zweier Vorderräder, eingeschränkt bzw. blockiert werden, indem im kurzen Zustand des Lastenrollers ein Lenkblockadeabschnitt des Hinterrahmenteils eine Vorwärts-Rückwärts-Bewegung bzw. eine Längsbewegung einer Lenkstange einschränkt bzw.. blockiert, insbesondere durch einen mechanischen Anschlag einschränkt bzw. blockiert.

In weiteren beispielhaften Ausführungsformen kann der Lastenroller insbesondere eine Lenkvorrichtung aufweisen, wobei an der Lenkvorrichtung ein betätigbares Verriegelungselement angeordnet ist, welches konfiguriert ist, bei Betätigung den kurzen Zustand des Lastenrollers zu fixieren.

Das betätigbare Verriegelungselement kann insbesondere ein stabförmiges Verriegelungselement sein, welches bei Betätigung konfiguriert ist, in eine Verriegelungsausnehmung des Rahmenteils einzugreifen, an dem die Lenkvorrichtung nicht angeordnet ist. Das Verriegelungselement kann dabei insbesondere länglich sein und einen runden, ovalen, quaderförmigen, rechteckförmigen oder anderen vieleckigen Querschnitt aufweisen. Die Verriegelungsausnehmung des Rahmenteils kann insbesondere eine zum Verriegelungselement komplementäre form aufweisen, und mit dem Verriegelungselement eine Spielpassung, Übergangspassung oder Presspassung ausbilden.

**In** beispielsweisen Ausführungsformen kann das betätigbare Verriegelungselement abschnittsweise in der Lenkvorrichtung aufgenommen sein, und mittels eines Federelements, wie beispielsweise eines Federstifts, und/oder mittels eines Hebels an einer bestimmten Position der Lenkvorrichtung gehalten sein.

**In** bevorzugten Ausführungsformen des elektrisch antreibbaren Lastenrollers kann die Schwenkbarkeit des zumindest einen Vorderrads im kurzen Zustand des Lastenrollers auf einen Bereich von etwa 0° bis etwa 5° eingeschränkt sein
bevorzugt auf einen Bereich von etwa 0° bis etwa 2° eingeschränkt sein und besonders bevorzugt vollständig blockiert sein.

Durch die Einschränkung der Schwenkbarkeit des zumindest Vorderrads kann eine für den Benutzer besonders intuitive und einfache Lenkbarkeit des Lastenrollers im kurzen Zustand bereitgestellt werden.

Weiter offenbart ist ein elektrisch antreibbarer Lastenroller, umfassend:
- ein Trittbrett;
wobei der elektrisch antreibbare Lastenroller charakterisiert ist durch
- einen Trittbrettsensor, welcher konfiguriert ist, ein Signal in einem Belastungszustand des Trittbretts abzugeben und/oder ein Signal in einem Entlastungszustand des Trittbretts abzugeben; und
- ein Lastenrollersteuerungs- und/oder -regelungssystem, welche mit dem Trittbrettsensor verbunden ist,
   -- wobei das Lastenrollersteuerungs- und/oder -regelungssystem konfiguriert ist, einen Antrieb des Lastenrollers an den Belastungszustand bzw. Entlastungszustand anzupassen.

Der bzw. die vorhergenannten elektrisch antreibbaren Lastenroller sowie deren bevorzugte, beispielhafte und alternative Ausführungsformen beziehen sich gleichermaßen auf den vorliegenden elektrisch antreibbaren Lastenroller.

Der Trittbrettsensor ermöglicht vorteilhaft, dass ein Belastungszustand und/oder ein Entlastungszustand des Trittbretts erkannt wird, um den Antrieb des Lastenrollers den Zustand entsprechend anzupassen, so dass beispielhaft das durch den Antrieb bereitgestellte Drehmoment in einem Entlastungszustand reduziert, auf einen vorbestimmten Wert begrenzt oder auf Null gesenkt wird, oder beispielhaft das durch den Antrieb bereitzustellende Drehmoment erst ab einem bestimmten Belastungszustand bis auf einen vorbestimmten Wert oder vollständig freigegeben wird.

Die Lastenrollersteuerungs- und/oder -regelungssystem kann insbesondere ein Speichermodul aufweisen, in dem Grenzwerte eintragbar bzw. vorgebbar sind, welche den Entlastungszustand und/oder den Belastungszustand definieren. Der Belastungszustand kann beispielsweise durch das Gewicht eines Benutzers definiert sein, so dass erst bei Mindestbelastung des Trittbretts mit dem Gewicht eines vorbestimmten Benutzers ein Antriebsdrehmoment freigegeben wird. Dadurch kann der Lastenroller vorteilhaft, sobald der Benutzer das Trittbrett verlässt, aufgrund eines beabsichtigten oder auch eines unbeabsichtigten Absteigens automatisch abgebremst werden.

Dies bietet ferner die vorteilhafte Möglichkeit eines gewissen Diebstahlschutzes oder hilft einer Fehlbenutzung vorzubeugen, indem ein Antriebsdrehmoment nur in einem bestimmten, auf den vorbestimmten Benutzer angepassten, Gewichtsbereich freigegeben wird, und daneben beschränkt oder beispielsweise auf Null gesenkt wird. In bevorzugten Ausführungsformen des elektrisch antreibbaren Lastenrollers kann der Trittbrettsensor einen Gewichtssensor umfassen, welcher ab und/oder unterhalb eines vorbestimmten Gewichts, den Belastungszustand bzw. den Entlastungszustand des Trittbretts erkennt, und/oder
kann der Trittbrettsensor einen Näherungssensor umfassen, welcher bei einer vorbestimmten Näherungsposition des Trittbretts und/oder in Abwesenheit einer vorbestimmten Näherungsposition, resultierend aus einer Belastung bzw. Entlastung des Trittbretts, den Belastungszustand bzw. den Entlastungszustand des Trittbretts erkennt.

In weiteren beispielhaften Ausführungsformen kann der Trittbrettsensor eine Mehrzahl von Gewichtssensoren und/oder eine Mehrzahl von Näherungssensoren umfassen.

Der Trittbrettsensor ermöglicht mittels des einen Gewichts- oder Näherungssensors bzw. mittels der mehreren Gewichts- und/oder Näherungssensoren, dass der Belastungszustand und/oder der Entlastungszustand genau und unabhängig voneinander detektiert werden können, und dass hinsichtlich möglicher Sicherheitsaspekte ein redundantes System zur Erkennung, ob sich einer oder mehrere Benutzer auf dem Trittbrett des Lastenrollers befinden, bereitgestellt werden kann.

Ferner offenbart ist ein elektrisch antreibbarer Lastenroller, umfassend:
- eine Vorderachse mit zumindest einem Vorderrad, wobei die Vorderachse an einem Vorderrahmenteil angeordnet ist; und
- eine Hinterachse mit zumindest einem Hinterrad, wobei die Hinterachse an einem Hinterrahmenteil angeordnet ist;
   -- wobei der Lastenroller einen kurzen Zustand aufweist, in dem eines von dem Hinterrahmenteil und dem Vorderrahmenteil zumindest abschnittsweise in dem anderen von dem Hinterrahmenteil und dem Vorderrahmenteil angeordnet ist;
dadurch gekennzeichnet, dass
- im langen Zustand des Lastenrollers, das Hinterrahmenteil und das Vorderrahmenteil konfiguriert sind, sich an in Längsrichtung des Lastenrollers zueinander beabstandeten Stellen abzustützen.

Der bzw. die vorhergenannten elektrisch antreibbaren Lastenroller sowie deren bevorzugte, beispielhafte und alternative Ausführungsformen beziehen sich gleichermaßen auf den vorliegenden elektrisch antreibbaren Lastenroller.

Insbesondere können das Hinterrahmenteil und das Vorderrahmenteil konfiguriert sein, sich an in Längsrichtung des Lastenrollers zueinander beabstandeten Stellen gegenseitig abzustützen, so dass sich mit anderen Worten im langen Zustand des Lastenrollers sowohl das Hinterrahmenteil am Vorderrahmenteil abstützt als auch das Vorderrahmenteil am Hinterrahmenteil abstützt, wobei die jeweiligen Stützstellen bevorzugt in Längsrichtung zueinander beabstandet sind.

Indem sich das Hinterrahmenteil und das Vorderrahmenteil im langen Zustand des Lastenrollers an in Längsrichtung des Lastenrollers beabstandeten Stellen abstützen, wird im langen Zustand ein sehr steifer Lastenroller bereitgestellt, der das Gewicht eines Benutzers auf dem Trittbrett trägt, ohne dass eines der Rahmenteile sich für den Benutzer merkbar absenkt und den Benutzer gegebenenfalls verunsichert.

Vorteilhaft wird durch das gegenseitige Abstützen des Hinterrahmenteils und des Vorderrahmenteils ermöglicht, dass die Rahmenteile eine zueinander bzw. miteinander versteifende Struktur bilden, welche ein Einknicken des Lastenrollers im langen Zustand verhindert, während eine Verschiebbarkeit der Rahmenteile zueinander sichergestellt ist, um den Lastenroller in den kurzen Zustand zu überführen, sofern kein Festlegungselement den langen Zustand fixiert.

In bevorzugten Ausführungsformen des elektrisch antreibbaren Lastenrollers kann eines von dem Vorderrahmenteil und dem Hinterrahmenteil einen Greifabschnitt aufweisen, und das andere von dem Vorderrahmenteil und dem Hinterrahmenteil einen greifbaren Abschnitt aufweisen, wobei der Greifabschnitt konfiguriert ist, den greifbaren Abschnitt drehbar zu greifen, und
kann ein Abstützabschnitt das Vorderrahmenteil und das Hinterrahmenteil gegen ein Verdrehen abstützen.

In beispielhaften Ausführungsformen des elektrisch antreibbaren Lastenrollers kann das Hinterrahmenteil einen Greifabschnitt aufweisen, und das Vorderrahmenteil einen greifbaren Abschnitt aufweisen, wobei der Greifabschnitt konfiguriert ist, den greifbaren Abschnitt drehbar zu greifen, und
kann ein Abstützabschnitt das Vorderrahmenteil und das Hinterrahmenteil gegen ein Verdrehen abstützen.

In alternativen Ausführungsformen des elektrisch antreibbaren Lastenrollers kann das Vorderrahmenteil einen Greifabschnitt aufweisen, und das Hinterrahmenteil einen greifbaren Abschnitt aufweisen, wobei der Greifabschnitt konfiguriert ist, den greifbaren Abschnitt drehbar zu greifen, und
kann ein Abstützabschnitt das Vorderrahmenteil und das Hinterrahmenteil gegen ein Verdrehen abstützen.

Durch die Konfiguration der Rahmenteile mittels des Greifabschnitts, der konfiguriert ist, den greifbaren Abschnitt drehbar zu greifen, und einen Abstützabschnitt, der die Rahmenteile gegen ein Verdrehen, insbesondere ein Verdrehen um die Breitenrichtung des Lastenrollers, gegeneinander abstützt bzw. sichert, wird vorteilhaft eine Mehrzahl an Freiheitsgraden bereitgestellt, um die Rahmenteile in den langen Zustand auf sichere Weise zu überführen. Gleichzeitig wird eine sich selbst definierende Ausrichtung der Rahmenteile zueinander im langen Zustand sichergestellt, wenn ein Drehen des einen Rahmenteils freigegeben ist, bis die Abstützung am Abstützabschnitt zwischen den Rahmenteilen erreicht ist.

Die sich gegenseitig versteifende Konfiguration des Vorderrahmenteils und des Hinterrahmenteils ermöglicht weiter vorteilhaft eine hohe Fahrdynamik, insbesondere bei Fahrten mit vergleichsweise hoher Geschwindigkeit, wie beispielsweise auf der Straße.

In bevorzugten Ausführungsformen des elektrisch antreibbaren Lastenrollers kann der Greifabschnitt integral als Sicherung gegen ein Lösen des Hinterrahmenteils von dem Vorderrahmenteil in Vorwärts-Rückwärts-Richtung wirken.

Mit anderen Worten kann der Greifabschnitt insbesondere einen Anschlag bilden, der ein weiteres Trennen bzw. Lösen des Hinterrahmenteils von dem Vorderrahmenteil, beim Übergang in den langen Zustand des Lastenrollers, verhindert. Somit stellt der Greifabschnitt insbesondere ein den langen Zustand des Lastenrollers definierendes Element dar, indem er ein weiteres gegenseitiges Verschieben der Rahmenteile, in eine die Rahmenteile trennende Richtung, verhindert.

In bevorzugten Ausführungsformen des elektrisch antreibbaren Lastenrollers können die zueinander beabstandeten Abschnitte zumindest einen Abstand von etwa 6 cm bis etwa 15 cm aufweisen.

Ein Abstand von etwa 6 cm bis etwa 15 cm zwischen den zueinander beabstandeten Abschnitten, an denen sich das Vorderrahmenteil und das Hinterrahmenteil abstützen, stellt vorteilhaft ein ausreichendes Versteifen des Lastenrollers im langen Zustand sicher, während ein Platzbedarf für Elemente, welche die Abstützung bilden, vorteilhaft gering gehalten wird.

In alternativen Ausführungsformen können die beabstandeten Abschnitte einen vom vorgenannten Bereich abweichenden Abstand aufweisen, was jedoch durch eine entsprechende materialaufwändige Versteifung des Vorderrahmenteils und des Hinterrahmenteils zu kompensieren wäre.

Ferner offenbart ist ein elektrisch antreibbarer Lastenroller, umfassend:
- eine Vorderachse mit zumindest einem Vorderrad;
- eine Hinterachse mit zumindest einem Hinterrad; und
- einen Lenker zum Verschwenken von einem von dem zumindest einen Vorderrad oder dem zumindest einen Hinterrad;
wobei der elektrisch antreibbare Lastenroller charakterisiert ist durch
- eine Lenkunterstützung, welche konfiguriert ist, ein Verschwenken des zumindest einen Vorderrads und/oder des zumindest einen Hinterrads durch Aufbringen eines Verschwenkmoments mittels eines Lokalmotors an dem zumindest einen Vorderrad und/oder dem zumindest einen Hinterrad zu unterstützen.

Der bzw. die vorhergenannten elektrisch antreibbaren Lastenroller sowie deren bevorzugte, beispielhafte und alternative Ausführungsformen beziehen sich gleichermaßen auf den vorliegenden elektrisch antreibbaren Lastenroller.

Durch die Lenkunterstützung wird vorteilhaft eine besonders ergonomische und einfache Lenkung des Lastenrollers für einen Benutzer bereitgestellt.

Das Verschwenkmoment kann mittels eines Lokalmotors insbesondere zusätzlich zum Antriebsmoment aufgebracht werden, jedoch auch aufgebracht werden, ohne dass ein Antriebsmoment an dem betreffenden Rad bereits anliegt, mit anderen Worten also unabhängig vom Anliegen eines Antriebsmoments aufgebracht werden, wie beispielsweise beim Schieben des Lastenrollers in einem kurzen Zustand. Dabei kann das Verschwenkmoment sowohl ein positives als auch ein negatives Vorzeichen haben.

In bevorzugten Ausführungsformen kann die Lenkunterstützung ein Verschwenkmoment ohne einen Servomotor oder einen Hydraulikmotor aufbringen.

In beispielhaften Ausführungsformen kann jedes Rad an einer Vorder- oder Hinterachse, welche mehrere Räder aufweist, mit einem Lokalmotor verbunden bzw. versehen sein, so dass bei einem Lenkvorgang der Lokalmotor des kurvenäußeren Rades ein zusätzlich Verschwenkmoment, zusätzlich zum Antriebsmoment, aufbringt, welches gleichgerichtet zum Antriebsmoment ist. Zusätzlich oder alternativ kann bei einem Lenkvorgang der Lokalmotor des kurveninneren Rades ein zusätzliches Verschwenkmoment, zusätzlich zum Antriebsmoment, aufbringen, welches dem Antriebsmoment entgegengerichtet ist, wodurch die Lenkbewegung bzw. die Kurvenbewegung des Lastenrollers vorteilhaft verstärkt wird.

In beispielhaften Ausführungsformen kann der Lokalmotor ein Radnabenmotor sein, der sowohl ein Antriebsmoment als auch ein Verschwenkmoment auf das jeweilige Rad aufbringt.

Mit anderen Worten kann der Lokalmotor, wie insbesondere ein Radnabenmotor, ein kurvenäußeres Rad schneller drehen bzw. antreiben als ein kurveninneres Rad. Weiterhin kann der Lokalmotor ein kurveninneres Rad langsamer drehen als ein kurvenäußeres Rad bzw. das kurveninnere Rad in die entgegengesetzte Richtung des kurvenäußeren Rades drehen, um jeweils als Unterstützung für den Benutzer beim Lenkvorgang zu fungieren.

In bevorzugten Ausführungsformen des elektrisch antreibbaren Lastenrollers kann der elektrisch antreibbare Lastenroller ferner
- einen Winkelsensor umfassen, wobei die Lenkunterstützung konfiguriert ist, das Verschwenkmoment in Abhängigkeit eines Signals des Winkelsensors aufzubringen.

Vorteilhaft ermöglicht der Winkelsensor, dass das Verschwenkmoment durch die Lenkunterstützung in Abhängigkeit des Lenkeinschlags des Benutzers aufgebracht wird, so dass der Benutzer beim Lenken bzw. bei der Kurvenfahrt situationsadäquat unterstützt wird, so dass auch besonders enge Kurven für den Benutzer des Lastenrollers, ohne ein mögliches rangieren, zurückgelegt werden können.

In beispielhaften Ausführungsformen ist der Winkelsensor mit einem Lastenrollersteuerungs- und/oder -regelungssystem verbunden, wobei der Winkelsensor ein Lenkwinkelsignal, auf Basis des gemessenen Winkels des Lenkeinschlags, an das Lastenrollersteuerungs- und/oder -regelungssystem sendet.

Das Lastenrollersteuerungs- und/oder -regelungssystem kann einen Lenkunterstützungsbefehl an die Lenkunterstützung senden, welche den Lokalmotor veranlasst ein Verschwenkmoment auf das betreffende Rad aufzubringen. Die Lenkunterstützung kann dabei einen funktionalen Bestandteil des Lastenrollersteuerungs- und/oder -regelungssystems bilden, oder einen Steuerungs- bzw. Regelungsabschnitt des Lokalmotors bilden.

In bevorzugten Ausführungsformen des elektrisch antreibbaren Lastenrollers kann der elektrisch antreibbare Lastenroller ferner eine Lastenhalterung umfassen,
wobei die Lastenhalterung bevorzugt vor einem Lenker angeordnet ist, und
wobei die Lastenhalterung konfiguriert ist wechselbar eine Lastenbox und/oder eine Fahrgastzelle zu halten.

Die Lastenhalterung kann insbesondere in Fahrtrichtung vorwärts vor dem Lenker bzw. vor einer Lenkvorrichtung angeordnet sein. Dadurch wird vorteilhaft ermöglicht, dass der Benutzer den Platzbedarf während der Fahrt des Lastenrollers stets einschätzen kann, und er darüber hinaus die Übersicht über das transportierte Gut bzw. über die transportierte Person behält.

Dadurch, dass die Lastenhalterung eine Lastenbox und/oder eine Fahrgastzelle wechselbar halten kann, kann der vorliegende Lastenroller eine Vielzahl geeigneter Einsatzszenarien abdecken, wie beispielsweise den Transport von Kindern, Kranken oder sonstigen Personen, sowie den Transport von Lebensmitteln, Nicht-Lebensmitteln, sonstigen Waren und insbesondere Paketen.

In beispielhaften Ausführungsformen kann die Lastenhalterung eine thermisch isolierende Kühlaufnahme aufweisen, um Kühlelemente, wie beispielsweise Kühlakkus, unterhalb einer Lastenbox zu platzieren, um wiederum bestimmte Waren kühlen zu können.

Zusätzlich oder alternativ kann die Lastenhalterung ein Heizelement und/oder Kühlelement aufweisen oder einen Stromanschluss zum Anschließen beispielsweise eines Heizelements und/oder Kühlelements aufweisen, so dass Personen sowie Güter bei einer für sie angenehmen bzw. gegebenenfalls geforderten Temperatur transportiert werden können.

In bevorzugten Ausführungsformen des elektrisch antreibbaren Lastenrollers kann der elektrisch antreibbare Lastenroller ferner ein betätigbares Verriegelungselement umfassen, welches konfiguriert ist, das Vorderrahmenteil und das Hinterrahmenteil in einem kurzen Zustand und/oder einem langen Zustand des Lastenrollers zueinander lösbar zu verriegeln.

Das betätigbare Verriegelungselement kann insbesondere ein im Wesentlichen stabförmiges Verriegelungselement sein, welches bei Betätigung konfiguriert ist, in eine Verriegelungsausnehmung einzugreifen, um das Vorderrahmenteil und das Hinterrahmenteil zueinander lösbar zu verriegeln.

In beispielhaften Ausführungsformen kann das betätigbare Verriegelungselement an dem Vorderrahmenteil angeordnet sein und durch Eingreifen in eine Verriegelungsausnehmung, die am Hinterrahmenteil ausgebildet bzw. angeordnet ist, das Vorderrahmenteil mit dem Hinterrahmenteil lösbar zu verriegeln. Die Konfiguration des Lastenrollers hinsichtlich des Verriegelungselements ist jedoch nicht darauf beschränkt, so dass das Verriegelungselement und die Verriegelungsausnehmung auch am jeweils anderen des Vorderrahmenteils und des Hinterrahmenteils angeordnet sein können.

Die Verriegelungsausnehmung kann insbesondere derart am Vorderrahmenteil oder Hinterrahmenteil angeordnet sein, dass ein Eingreifen des Verriegelungselements darin erst ermöglicht ist, wenn der lange Zustand bzw. der kurze Zustand in definierter Weise erreicht ist, wie beispielsweise durch einen Greifabschnitt, der mit einem greifbaren Abschnitt zusammenwirkt und eine über einen langen Zustand hinausgehende lösende Bewegung des Vorderrahmenteils und des Hinterrahmenteils einschränkt bzw. begrenzt.

In bevorzugten Ausführungsformen kann das betätigbare Verriegelungselement abschnittsweise in einer Lenkvorrichtung des Lastenrollers aufgenommen sein und mittels eines Federelements, wie beispielsweise eines Federstifts, und/oder mittels eines Hebels an einer bestimmten Position der Lenkvorrichtung gehalten sein.

Der Benutzer ist dadurch vorteilhaft in der Lage an der Lenkvorrichtung auf optische und/oder haptische Weise zu erkennen, ob der lange Zustand des Lastenrollers korrekt verriegelt bzw. fixiert ist. Zudem erhält der Lastenroller, indem das betätigbare Verriegelungselement zumindest teilweise in der Lenkvorrichtung aufgenommen ist, eine für einen Benutzer intuitive und darüber hinaus schlanke bzw. platzsparende Konfiguration.

Beispielsweise kann an der Lenkvorrichtung zumindest eine Lampe und/oder ein Display angeordnet sein. Die zumindest eine Lampe und/oder das Display können insbesondere konfiguriert sein, ein Signal, wie beispielsweise ein elektrisches Signal, welches von einem Sensor oder einem Lastenrollersteuerungs- und/oder -regelungssystem gesendet wird, als Lichtsignal, optisches Signal, Warnhinweis, Textnachricht oder ähnliches wiederzugeben bzw. anzuzeigen.

In weiteren beispielhaften Ausführungsformen kann die Verriegelungsausnehmung eine Einführschräge aufweisen, wie beispielsweise eine Rampe und/oder eine konische Öffnung, um ein Einführen des Verriegelungselements in die Verriegelungsausnehmung zu erleichtern.

In bevorzugten Ausführungsformen des elektrisch antreibbaren Lastenrollers kann das Trittbrett in einem kurzen Zustand des Lastenrollers im Wesentlichen vertikal verschwenkt gehalten sein, und/oder
in einem langen Zustand des Lastenrollers im Wesentlichen horizontal gehalten sein,
wobei das Trittbrett bevorzugt magnetisch in dem kurzen Zustand und/oder in dem langen Zustand gehalten sein kann.

In alternativen Ausführungsformen kann das Trittbrett im kurzen Zustand des Lastenrollers in einer von einer vertikalen Richtung abweichenden Richtung gehalten sein und/oder im langen Zustand des Lastenrollers in einer von einer horizontalen Richtung abweichenden Richtung gehalten sein.

Durch die Klappbarkeit bzw. die Verschwenkbarkeit des Trittbretts, kann im kurzen Zustand des Lastenrollers der Lastenroller in einer Geometrie bereitgestellt werden, welche besonders platzsparend ist, und dem Lastenroller dadurch ermöglicht auch in Gebäuden verfügbare Wege, wie Fahrstühle, Flure, Türen und Zimmer, als Transportwege, welche mit dem Lastenroller zurückgelegt werden können, zu verwenden.

Darüber hinaus kann beispielsweise das Hinterrahmenteil im kurzen Zustand des Lastenrollers zumindest abschnittsweise in das Vorderrahmenteil eingeschoben sein, wobei die Klappbarkeit bzw. Verschwenkbarkeit des Trittbretts es erlaubt, dass das Trittbrett für den kurzen Zustand des Lastenrollers nicht mit eingeschoben werden muss, wodurch das Vorderrahmenteil vorteilhaft platzsparend und dadurch auch ressourcenschonend ausgebildet sein kann, da das Trittbrett, zur Sicherstellung eines sicheren Tritts des Benutzers, bevorzugt breiter ist als das Hinterrahmenteil.

In beispielhaften Ausführungsformen kann das Hinterrahmenteil um eine Länge, die etwa der 0,7-fachen bis etwa der 0,9-fachen Länge des Trittbretts entspricht, in das Vorderrahmenteil eingeschoben werden.

Weiterhin wird durch die Klappbarkeit bzw. die Verschwenkbarkeit des Trittbretts ermöglicht, dass im langen Zustand des Lastenrollers ein vorteilhaft breites Trittbrett für den Benutzer bereitgestellt wird, welches einen sicheren Sitz bzw. einen sicheren Stand während der Fahrt des Lastenrollers für den Benutzer ermöglicht, welches im kurzen Zustand des Lastenrollers jedoch keinerlei Einfluss auf die platzsparende Konfiguration für den Lastenroller, zum beispielsweisen Transport in Gebäuden, hat.

Durch die Bereitstellung magnetischer Halterungen für das Trittbrett im kurzen und/oder im langen Zustand, wird vorteilhafterweise ein passives Trittbretthaltesystem bereitgestellt, welches insbesondere verschleißarm ist.

Zusätzlich oder stattdessen kann das Trittbrett mechanisch, beispielsweise durch Verrastungen, Verkeilungen oder auch mittels eines Schlosses im langen Zustand und/oder im kurzen Zustand gehalten bzw. fixiert werden.

**In** bevorzugten Ausführungsformen des elektrisch antreibbaren Lastenrollers kann der elektrisch antreibbare Lastenroller ferner eine Sitzvorrichtung umfassen, wobei die Sitzvorrichtung vorzugsweise
ein höhenverstellbares Sitzelement und/oder
ein gegenüber einer Längsrichtung des Lastenrollers neigbares Sitzelement aufweist.

Durch die Bereitstellung einer vorzugsweise einstellbaren Sitzvorrichtung kann eine besonders ergonomische und auch sichere Fortbewegung mittels des Lastenrollers sichergestellt werden.

**In** beispielhaften Ausführungsformen kann die Sitzvorrichtung eine Sicherungsvorrichtung, wie beispielsweise einen Gurt mit Schnalle, umfassen, zur Sicherung des Benutzers und/oder eines Fahrgastes.

Ferner offenbart ist ein Lastenrollersteuerungs- und/oder -regelungssystem für einen Lastenroller zur Steuerung und/oder Regelung eines Antriebs und/oder einer Lenkunterstützung eines elektrisch antreibbaren Lastenrollers nach einem der vorangehenden elektrisch antreibbaren Lastenroller bzw. nach einem der vorangehenden bevorzugten, alternativen und beispielhaften Ausführungsformen.

Das Lastenrollersteuerungs- und/oder -regelungssystem kann insbesondere mit einer Vielzahl von Sensoren unmittelbar oder mittelbar verbunden sein, und konfiguriert sein, auf Basis eines Sensorsignals:
- ein Drehmoment zum Antreiben des Lastenrollers freizugeben, zu beschränken oder zu verweigern; und/oder
- einen Lenkunterstützungsbefehl an eine Lenkunterstützung zu geben, um ein eine Lenkung bzw. eine Kurvenfahrt unterstützendes Verschwenkmoment auf eines der Räder aufzubringen; und/oder
- einen Stromfluss hin zu einem Elektromotor freizugeben, zu beschränken oder zu unterbrechen.

Weiterhin kann das Lastenrollersteuerungs- und/oder -regelungssystem konfiguriert sein, die jeweils mittels der Sensoren erfassten Zustände anzuzeigen. Die Anzeige der erfassten bzw. detektieren Zustände kann insbesondere mittels einer oder mehrerer Lampen und/oder mittels eines Display erfolgen. Die Anzeige bzw. die Wiedergabe eines Signals kann beispielhaft ein Lichtsignal, ein optisches Signal, einen Warnhinweis, eine Textnachricht oder ähnliches umfassen bzw. sein.

Der bzw. die vorhergenannten elektrisch antreibbaren Lastenroller sowie deren bevorzugte, beispielhafte und alternative Ausführungsformen beziehen sich gleichermaßen auf das vorliegende Lastenrollersteuerungs- und/oder - regelungssystem.

Das vorliegende Lastenrollersteuerungs- und/oder -regelungssystem ermöglicht vorteilhaft den erfindungsgemäßen Lastenroller auf ergonomische Weise zu steuern und/oder zu regeln.

In beispielhaften Ausführungsformen kann der Lastenroller ein Display umfassen, welches mit dem Lastenrollensteuerungs- und/oder -regelungssystem verbunden ist, und zur Wiedergabe und/oder Auswahl verschiedener steuernder und/oder regelnder Funktionen, an den Benutzer bzw. für den Benutzer, konfiguriert ist.

Weiterhin kann das Lastenrollersteuerungs- und/oder -regelungssystem einen Sender und/oder Empfänger umfassen, der eine Fernsteuerung des Lastenrollers mittels eines externen Geräts, welches einen entsprechenden Sender umfasst, erlaubt. Das Lastenrollensteuerungs- und/oder Regelungssystem kann dabei insbesondere einen Bluetooth-, RFID-, UMTS- oder sonstigen Funksender bzw.
-empfänger umfassen.

Darüber hinaus kann das Lastenrollersteuerungs- und/oder -regelungssystem insbesondere einen Prozessor, ein Speichermodul und/oder einen Computer umfassen, um Signale zu verarbeiten, Befehle an den Antrieb und andere Peripherie des Lastenrollers zu senden sowie Routen bzw. Computerprogramme auszuführen.

Ferner offenbart ist ein Verfahren zur Steuerung und/oder Regelung eines elektrisch betreibbaren Lastenrollers, umfassend die Schritte:
- Abfragen von zumindest einem von dem Trittbrettsensor, dem Hinterradschwenksensor und dem Winkelsensor gemäß einem der vorangehenden Aspekte bzw. Ausführungsformen; und
- Steuern bzw. Regeln von zumindest einem von einem Antriebsmoment und/oder einem Verschwenkmoment in Antwort auf die Sensorabfrage.

Der bzw. die vorhergenannten elektrisch antreibbaren Lastenroller sowie deren bevorzugte, beispielhafte und alternative Ausführungsformen beziehen sich gleichermaßen auf das vorliegende Verfahren zur Steuerung und/oder Regelung eines elektrisch betreibbaren Lastenrollers.

Ferner offenbart ist ein Computerprogrammprodukt, umfassend Befehle, die bei der Ausführung des Computerprogrammprodukts durch einen Computer, diesen veranlassen, das Verfahren zur Steuerung und/oder Regelung eines elektrisch betreibbaren Lastenrollers auszuführen.

Der bzw. die vorhergenannten elektrisch antreibbaren Lastenroller sowie deren bevorzugte, beispielhafte und alternative Ausführungsformen beziehen sich gleichermaßen auf das vorliegende Computerprogrammprodukt.

Im Folgenden werden Ausführungsformen der Erfindung anhand der beiliegenden Figuren näher beschrieben. Es versteht sich, dass die vorliegende Erfindung nicht auf diese Ausführungsformen beschränkt sind, und dass einzelne Merkmale der

Ausführungsformen im Rahmen der beiliegenden Ansprüche zu weiteren Ausführungsformen kombiniert werden können.

Es zeigt:
- Figur 1: eine perspektivische Ansicht einer erfindungsgemäßen Lastenrollers;
- Figur 2: eine perspektivische Ansicht eines erfindungsgemäßen Lastenrollers von unten;
- Figur 3: eine Schnittdarstellung eines erfindungsgemäßen Lastenrollers;
- Figur 4: eine perspektivische Ansicht eines erfindungsgemäßen Lastenrollers mit nicht dargestelltem Trittbrett; und
- Figur 5: eine perspektivische Ansicht eines Trittbretts eines erfindungsgemäßen Lastenrollers; und
- Figur 6: eine weitere Schnittdarstellung eines erfindungsgemäßen Lastenrollers.

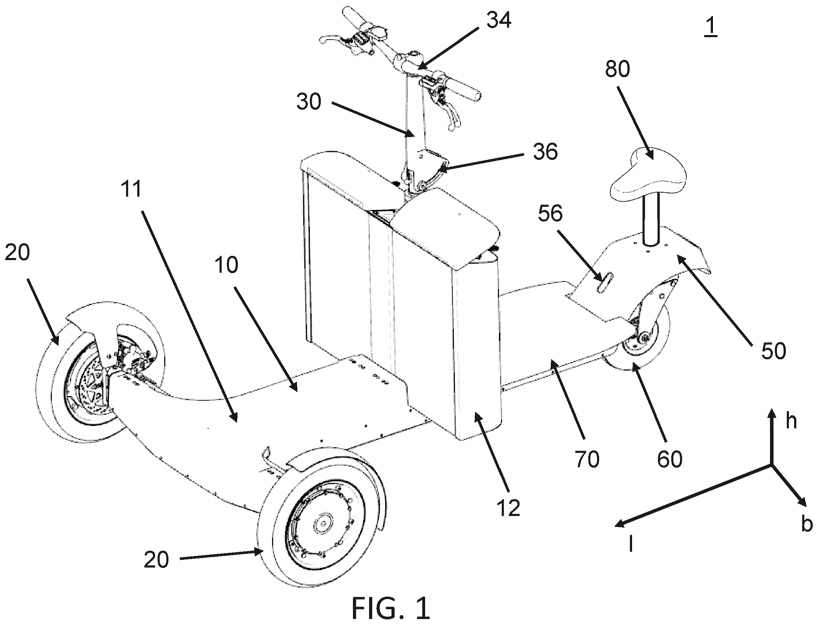

Fig. 1 zeigt eine beispielhafte Ausführungsform eines erfindungsgemäßen Lastenrollers 1 in perspektivischer Ansicht. Fig. 1 gibt den Lastenroller 1 dabei insbesondere in einem langen Zustand wieder. Wie in Fig. 1 beispielhaft dargestellt, kann der Lastenroller 1 insbesondere eine Sitzvorrichtung 80 sowie ein Trittbrett 70 aufweisen, so dass ein Benutzer den Lastenroller 1 im Sitzen sowie im Stehen fahren kann.

Wie weiter in Fig. 1 gezeigt, kann der Lastenroller beispielhaft eine Vorderachse aufweisen, welche an einem Vorderrahmenteil 10 des Lastenrollers 1 angeordnet ist, sowie eine Hinterachse aufweisen, welche an einem Hinterrahmenteil 50 des Lastenrollers 1 angeordnet ist. An der Vorderachse können beispielhaft zwei Vorderräder 20 angeordnet sein. An der Hinterachse kann beispielhaft ein einzelnes Hinterrad 60 angeordnet sein. Der erfindungsgemäße Lastenroller 1 ist jedoch nicht darauf beschränkt, so dass in alternativen Ausführungsformen an der Hinterachse beispielsweise zwei Hinterräder 60 angeordnet sein können und an der Vorderachse ein Vorderrad 20 angeordnet sein kann, oder dass sowohl an der Vorderachse als auch an der Hinterachse jeweils zwei Räder angeordnet sein können. Weiterhin können die jeweiligen Räder auch zwillingshaft bzw. als Zwillingsräder ausgebildet sein.

Wie weiter in Fig. 1 zu sehen, kann der Lastenroller 1 insbesondere einen Behälter 12 aufweisen, der beispielsweise an dem Vorderrahmenteil 10 angeordnet bzw. fixiert sein kann. Der Behälter 12 kann insbesondere in Längsrichtung I an einer dem Benutzer zugewandten Seite des Vorderrahmenteils 10 angeordnet bzw. fixiert sein, insbesondere wenn der Benutzer auf dem Trittbrett 70 steht.

Der Behälter 12 kann insbesondere konfiguriert sein, einen oder mehrere Akkus wechselbar aufzunehmen, um den Lastenroller 1 zum Zurücklegen einer größeren Distanz bereit zu machen, was vor allem gegenüber einem Aufladen mittels der Steckdose eine Zeitersparnis bewirkt.

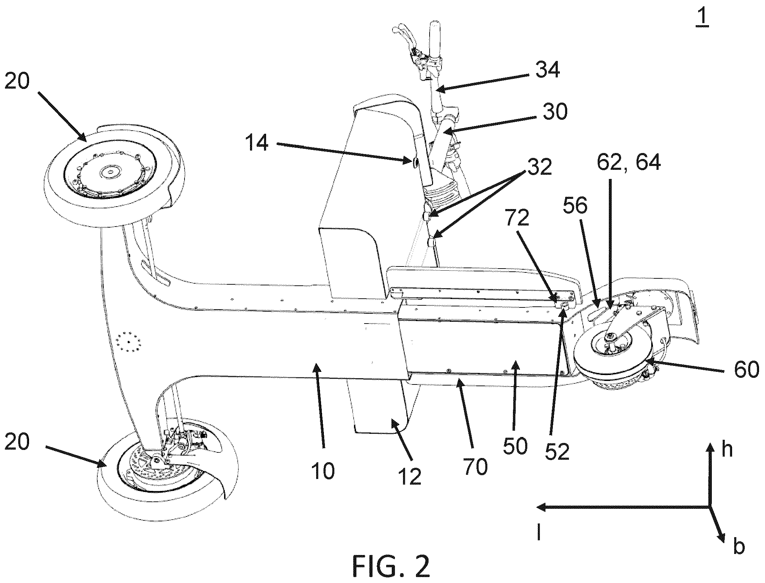

Der Behälter 12 kann insbesondere ein verschließbarer Behälter 12 sein, der mit einer Öffnung und wahlweise mit einer Klappe oder einem Deckel versehen ist, die bevorzugt mittels eines Schlosses 14, wie in Fig. 2 angedeutet, am Behälter 12 gegen ein Öffnen verriegelt werden können.

Wie weiterhin in Fig. 1 gezeigt, kann der Lastenroller 1 eine Lenkvorrichtung 30 aufweisen, welche sich zumindest abschnittsweise im Wesentlichen nach oben bzw. in Höhenrichtung h erstreckt. Die Lenkvorrichtung 30 kann an ihrem oberen Ende bzw. an ihrem in Höhenrichtung h oberen Ende einen Lenker 34 aufweisen, der es dem Benutzer ermöglicht den Lastenroller 1 zu lenken bzw. eine Kurvenfahrt des Lastenrollers 1 auf Basis eines Lenkeinschlags durch den Benutzer ermöglicht. Wie in Fig. 1 beispielhaft angedeutet, kann der Lenker 34 ähnlich eines Fahrrad- oder Motorradlenkers ausgeführt sein, wodurch einem Benutzer eine besonders intuitive Steuerung des Lastenrollers 1 ermöglicht wird. Der Lenker 34 kann insbesondere eines oder mehrere Bremsbedienelemente, wie beispielsweise Bremshebel, eines oder mehrere Antriebsbedienelemente, wie beispielsweise einen Daumengashebel, eines oder mehrere Signalbedienelement, wie beispielsweise eine Hupe oder Klingel, eines oder mehrere Beleuchtungsbedienelemente, eines oder mehrere Displays, und/oder eines oder mehrere Eingabe- bzw. Bedienelemente, welche für eine akustische und/oder taktile Eingabe bzw. Bedienung geeignet ist, wie beispielsweise ein Mikrofon, Touchdisplay und/oder eine Tastatur, umfassen.

Wie in Fig. 1 gezeigt, kann die Lenkvorrichtung 30 eine Lenkerneigungsverstellung 36 umfassen, mittels der die Neigung eines Abschnitts der Lenkvorrichtung 30 oberhalb der Lenkerneigungsverstellung 36 bzw. die Neigung des Lenkers 34 gegenüber der Längsrichtung I, bzw. in einer Ebene aufgespannt durch die Längsrichtung I und die Höhenrichtung h, eingestellt bzw. justiert werden kann. Dies ermöglicht dem Benutzer eine vorteilhafte ergonomische Einstellung bzw. Justage des Lenkers 34. Zusätzlich oder alternativ kann die Lenkvorrichtung 30 eine Lenkerhöhenverstellung aufweisen, welche eine Einstellung bzw. Justage des Lenkers 34 entlang der Lenkvorrichtung 30, beispielsweise in Höhenrichtung h, erlaubt, was dem Benutzer ebenfalls eine vorteilhafte ergonomische Einstellung des Lenkers 34 ermöglicht.

Gleichermaßen, wenngleich in Fig. 1 nicht gezeigt, kann die Sitzvorrichtung 80 beispielsweise eine Sitzhöhenverstellung und/oder eine Sitzneigungsverstellung aufweisen, um einem Benutzer ein ergonomisches Sitzen bzw. Abstützen auf dem Lastenroller 1 zu ermöglichen.

Wie schließlich weiter in Fig. 1 gezeigt, kann insbesondere das Vorderrahmenteil 10 eine Lastenhalterung 11 umfassen, welches insbesondere konfiguriert sein kann eine Lastenbox und/oder eine Fahrgastzelle (beides nicht gezeigt) zu halten. Die Lastenhalterung 11 kann dabei vorzugsweise Schienenelemente und/oder rückstellfähige Verbindungselemente und/oder Gitterelemente umfassen, um Lastenboxen und/oder Fahrgastzellen reversibel daran befestigen zu können, sowie Lastenboxen und/oder Fahrgastzellen von fremder Konstruktion mittels Gurten oder Riemen zu befestigen. Wie in Fig. 1 gezeigt, kann die Lastenhalterung 11 insbesondere zwischen zwei Vorderrädern 20 ausgebildet sein, so dass der Lastenroller 1 einen vorteilhaft niedrigen Schwerpunkt bei Beladung erhält, was wiederum die Fahrstabilität vorteilhaft verbessert, während die Vorderräder 20 gleichzeitig einen großen Raddurchmesser aufweisen können, wodurch die Vorderräder 20, und damit der Lastenroller 1, vorteilhaft unempfindlich gegenüber Unebenheiten werden bzw. wird.

Fig. 2 zeigt eine weitere perspektivische Ansicht einer Ausführungsform eines erfindungsgemäßen Lastenrollers 1, jedoch im Wesentlichen von einer Unterseite. Fig. 2 gibt dabei einen Lastenroller 1 in einem langen Zustand wieder. Wie in Fig. 2 zu sehen ist, kann der Lastenroller 1 insbesondere ein Vorderrahmenteil 10 und ein Hinterrahmenteil 50 aufweisen, wobei das Vorderrahmenteil 10 das Hinterrahmenteil 50 abschnittsweise aufgenommen hat. Das Hinterrahmenteil 50 und das Vorderrahmenteil 10 können zueinander verschiebbar konfiguriert sein, insbesondere entlang der Längsrichtung I zueinander verschiebbar konfiguriert sein. Während der lange Zustand des Lastenrollers 1 ein Zustand ist, in dem das Hinterrahmenteil 50 insbesondere maximal, also bis zu einem Endpunkt oder Anschlag, aus dem Vorderrahmenteil 10 ausgezogen bzw. herausgezogen ist, kann demgegenüber ein kurzer Zustand des Lastenrollers 1 ein Zustand sein, in dem das Hinterrahmenteil 50 maximal, also bis zu einem anderen Endpunkt oder einem anderen Anschlag, in das bzw. dem Vorderrahmenteil 10 eingeschoben bzw. aufgenommen ist. Die abschnittsweise Aufnahme des Hinterrahmenteils 50 in dem Vorderrahmenteil 10 ist dabei nicht so zu verstehen, dass ein Abschnitt des Hinterrahmenteils 50 vollständig, also vollumfänglich, von dem Vorderrahmenteil 10 umgeben ist. Vielmehr kann das Hinterrahmenteil 50 derart in dem Vorderrahmenteil 10 aufgenommen sein, dass der aufgenommene Teil des Hinterrahmenteils 50 nur abschnittsweise bzw. teilweise von dem Vorderrahmenteil 10 umgeben ist. In alternativen Ausführungsformen, also nicht wie in Fig. 2 gezeigt, kann das Vorderrahmenteil 10 auch zumindest abschnittsweise in dem Hinterrahmenteil 50 aufgenommen sein oder es können Hinterrahmenteil 50 und Vorderrahmenteil 10 jeweils abschnittsweise ineinander eingreifen bzw. sich abschnittsweise umgeben. Weiter alternativ können das Vorderrahmenteil 10 und das Hinterrahmenteil 50 separat zueinander angeordnet sein und beispielsweise an einander vorbei verschiebbar sein.

Wie weiter in Fig. 2 zu sehen, kann der lange Zustand des Lastenrollers 1 insbesondere dadurch gekennzeichnet sein, dass sich das Trittbrett 70 in einem fahrbereiten Zustand für einen Benutzer befindet. Mit anderen Worten kann der lange Zustand des Lastenrollers 1 dadurch gekennzeichnet sein, dass das Trittbrett 70 derart am Lastenroller 1 positioniert ist, dass sich ein Benutzer darauf stellen kann. Das Trittbrett 70 kann dabei sowohl im Wesentlichen horizontal verlaufen, als auch gegenüber einem Untergrund des Lastenrollers 1 geneigt sein.

Wie in Fig. 2 gezeigt, kann das Trittbrett 70 im langen Zustand des Lastenrollers 1 sich mit einem in Längsrichtung I vorderen Abschnitt am Vorderrahmenteil 10 abstützen bzw. daran befestigt sein und mit einem in Längsrichtung I hinteren Abschnitt am Hinterrahmenteil 50 abstützen bzw. daran befestigt sein, wodurch das Trittbrett 70, neben der Funktion des Bereitstellens eines sicheren Tritts für den Benutzer, integral als relative Festlegung bzw. Fixierung des Hinterrahmenteils 50 zu dem Vorderrahmenteil 10 wirkt.

Wie aus den Figuren 1 und 2 ersichtlich, ist das Trittbrett 70 im Allgemeinen, und insbesondere im langen bzw. fahrbereiten Zustand, oberhalb des Hinterrahmenteils 50 angeordnet bzw. auf durch das zumindest abschnittsweise in Höhenrichtung h darunterliegende Hinterrahmenteil 50 abgestützt.

Wie in Fig. 2 gezeigt, kann im langen Zustand ein Festlegungselement 72 des Trittbretts 70 mit einem Festlegungsgegenelement 52 des Hinterrahmenteils 50 in Eingriff sein. Beispielsweise kann das Festlegungselement 72 das Festlegungsgegenelement 52 zumindest abschnittsweise umgreifen, insbesondere zumindest abschnittsweise umgreifend einklemmen. Das Festlegungselement 72 kann dabei beispielsweise aus einen Hartgummi aufweisen bzw. daraus bestehen, der ein umgreifendes Klemmen erleichtert und gleichzeitig eine dämpfende Wirkung sicherstellt, so dass sich der Eingriff zwischen Festlegungselement 72 und Festlegungsgegenelement 52 auch bei Vibrationen, beispielsweise verursacht durch Befahren eines bestimmten Untergrunds, nicht von selbst löst.

Zwar nicht in Fig. 2 gezeigt, kann das Trittbrett 70 beispielsweise zwei sich in Breitenrichtung b gegenüberliegende Festlegungselemente 72 aufweisen, welche mit einem entsprechenden Paar von Festlegungsgegenelementen 52 in Eingriff gelangen können. Alternativ kann das Trittbrett 70 auch eine beliebige Vielzahl von Festlegungselementen 72 aufweisen, welche mit einer entsprechenden Vielzahl von Festlegungsgegenelementen 52 in Eingriff gelangen können.

Wie durch Fig. 2 angedeutet, kann das Trittbrett 70 insbesondere eine größere Breite in Breitenrichtung b als das Hinterrahmenteil 50 aufweisen, wodurch eine ausreichend große Trittfläche für einen Benutzer, beispielsweise mit Beifahrer, bereitgestellt wird. Weiterhin kann das Hinterrahmenteil 50, in dem Bereich, in dem das Trittbrett 70 im langen Zustand darauf abgestützt ist, eine geringere Breite bzw. einen geringeren Querschnitt aufweisen, als das Vorderrahmenteil 10. Der Querschnitt meint dabei insbesondere einen Querschnitt in Höhenrichtung h und in Breitenrichtung b des Lastenrollers 1 und steht stellvertretend für die Maße des Hinterrahmenteils 50 in Höhenrichtung h und in Breitenrichtung b, welche insbesondere kleiner sein können, als diejenigen des Vorderrahmenteils 10. Dadurch wird ermöglicht, dass durch ein Hochklappen bzw. ein Verschwenken des Trittbretts 70 nach oben, das Hinterrahmenteil 50 in das Vorderrahmenteil 10 eingeschoben werden kann, insbesondere mit einer Länge im Bereich des etwa 0,7-fachen bis etwa 0,9-fachen des Trittbretts 70 in das Vorderrahmenteil 10 eingeschoben werden kann. Dadurch wird vorteilhaft ermöglicht, dass der vorliegende Lastenroller 1 in einem langen Zustand und in einem kurzen Zustand betrieben werden kann, der gegenüber dem langen Zustand deutlich verkürzt ist, so dass der vorliegende Lastenroller 1 im langen Zustand zum Fahren, insbesondere auf Straßen und Radwegen, geeignet ist, während der kurze Zustand zum Schieben, insbesondere in Gebäuden geeignet ist.

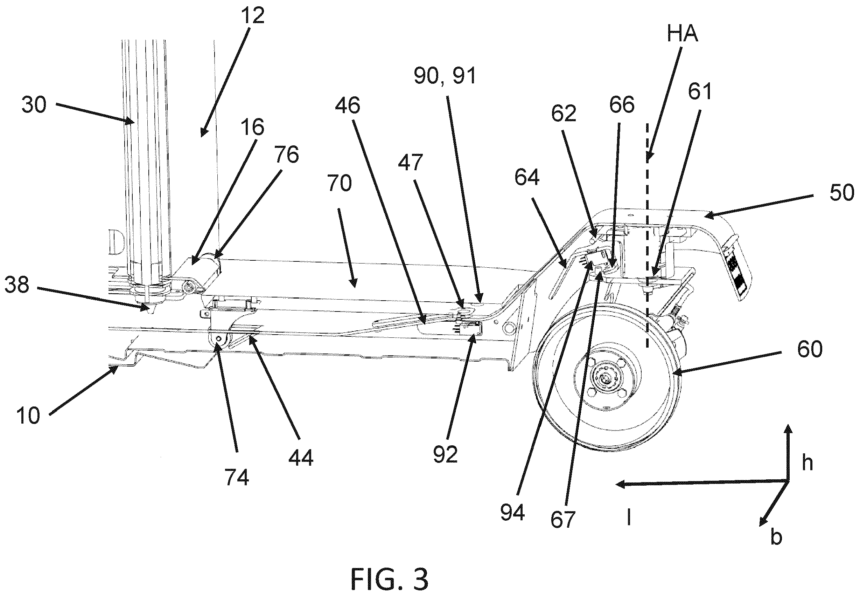

Das Verschwenken bzw. das Hochklappen des Trittbretts 70 kann dabei insbesondere um eine Gelenkaufnahme 16, welche ein Gelenkteil 76 des Trittbretts 70 aufnimmt, erfolgen, wie in Fig. 3 besser gezeigt.

Wie weiter in Fig. 2 gezeigt, können eine oder mehrere Halterungen 32 an dem Behälter 12 und/oder an der Lenkvorrichtung 30 angeordnet sein, um das Trittbrett 70 im hochgeklappten bzw. nach oben geschwenkten Zustand zu halten. Die Halterungen 32 sind in Fig. 2 nur schematisch skizziert und können insbesondere Magnete, Greifer, Passstücke oder ähnliches umfassen, die das hochgeklappte bzw. nach oben geschwenkte Trittbrett 70 magnetisch oder mechanisch halten, und mit dem hochgeklappten bzw. nach oben geschwenkten Trittbrett 70 beispielsweise ein Push-Push-System oder ein Push-Pull-System bilden.

Wie weiterhin in Fig. 2 gezeigt, können an dem Behälter 12 eines oder mehrere Schlösser 14 angeordnet sein, welche ein sicheres Verriegeln des Behälters 12 ermöglichen. Dadurch können Wertgegenstände eines Benutzer 12, genauso wie Wechselelemente, wie beispielsweise Akkus, oder Token zur Identifikation eines Benutzers sicher vor Diebstahl geschützt werden.

Wie weiter in Fig. 2 gezeigt, kann das Hinterrahmenteil 50 eine Klappöffnung 56 aufweisen. Die Klappöffnung 56 kann insbesondere in Höhenrichtung h oberhalb des Hinterrads 60 angeordnet sein. Die Klappöffnung 56 bildet insbesondere eine Öffnung, welche einen Bereich, in dem das Hinterrad 60 angeordnet ist, also im Wesentlichen unterhalb des Hinterrahmenteils 50, und einen Bereich, in dem das Trittbrett 70 angeordnet ist, also im Wesentlichen oberhalb des Hinterrahmenteils 50, verbindet.

Die Klappöffnung 56 ist insbesondere konfiguriert von einer Hinterradfreigabeeinrichtung 74, insbesondere von einem Rollelement der Hinterradfreigabeeinrichtung 74, welche an dem Trittbrett 70 angeordnet ist und in Fig. 3 besser zu sehen ist, passiert zu werden. Die Klappöffnung 56 kann vorzugsweise von der Hinterradfreigabeeinrichtung 74 passiert werden, wenn der Lastenroller 1 in einen kurzen Zustand übergeht bzw. bereits schon kurz vor Erreichen des kurzen Zustands, und wenn das Trittbrett 70 sich in einem hochgeklappten bzw. verschwenkten Zustand befindet, also in einem nicht fahrbereiten Zustand befindet.

Im langen Zustand des Lastenrollers 1 kann die Klappöffnung 56 insbesondere durch eine rückstellfähig auslenkbare Hinterradsicherungseinrichtung 62 verschlossen sein, insbesondere durch einen Betätigungsabschnitt 64 der rückstellfähig auslenkbaren Hinterradsicherungseinrichtung 62 verschlossen sein. Die rückstellfähig auslenkbare Hinterradsicherungseinrichtung 62 bzw. deren Betätigungsabschnitt 64 können im langen Zustand des Lastenrollers 1 insbesondere konfiguriert zumindest abschnittsweise an dem die Klappöffnung 56 umgebenden Abschnitt des Hinterrahmenteils 50 anzugrenzen, anzuliegen bzw. diesen zu berühren. Dadurch wird im langen Zustand des Lastenrollers 1 vorteilhaft verhindert, dass Dreck vom Hinterrad 60 durch die Klappöffnung 56 hindurch und gegebenenfalls zum Benutzer hin geschleudert wird.

Weitere Details zur rückstellfähig auslenkbaren Hinterradsicherungseinrichtung 62 werden durch die Schnittansicht in Fig. 3 verdeutlicht, welche eine perspektivische Ansicht eines Schnitts entlang der Höhenrichtung h und der Längsrichtung I des Lastenrollers 1 wiedergibt.

Fig. 3 zeigt zur Wiedergabe deren Funktion, die rückstellfähig auslenkbare Hinterradsicherungseinrichtung 62 in einer ausgelenkten Position. Mit anderen Worten zeigt Fig. 3 die rückstellfähig auslenkbare Hinterradsicherungseinrichtung 62 in einer Position, welche die rückstellfähig auslenkbare Hinterradsicherungseinrichtung 62 einnimmt, wenn sie durch die Hinterradfreigabeeinrichtung 74 ausgelenkt bzw. betätigt wird. Gleichzeitig ist in Fig. 3 die Hinterradfreigabeeinrichtung 74 mit dem Trittbrett 70 in einer fahrbereiten Position des Trittbretts 70 dargestellt. Mit anderen Worten ist die Hinterradfreigabeeinrichtung 74 in Fig. 3 jedoch in einer Position dargestellt, in der sie die rückstellfähig auslenkbare Hinterradsicherungseinrichtung 62 noch nicht betätigt. Dies soll lediglich der Übersichtlichkeit dienen.

Wird im Weiteren lediglich von der Hinterradsicherungseinrichtung 62 gesprochen, sei darunter stets die rückstellfähig auslenkbare Hinterradsicherungseinrichtung 62 zu verstehen.

Wie in Fig. 3 im Bereich des Hinterrads 60 verdeutlicht, kann die Hinterradsicherungseinrichtung 62 insbesondere ein Nutelement 66 aufweisen, welches konfiguriert ist, in einem nicht ausgelenkten Zustand der Hinterradsicherungseinrichtung 62 mit einem Sicherungsvorsprung 67 in Eingriff zu gelangen, so dass die Schwenkbarkeit des Hinterrads 60, also die Drehbarkeit des Hinterrads 60 um eine Hochachse HA, je nach Gestaltung des Eingriffs zwischen Nutelement 66 und Sicherungsvorsprung 67, eingeschränkt bzw. blockiert ist.

Wie in Fig. 3 gezeigt, kann der Sicherungsvorsprung 67 an dem Hinterrad 60 angeordnet sein bzw. damit verbunden sein. Das Hinterrad 60 kann insbesondere an einer Hinterradaufhängung 61 angeordnet sein bzw. daran befestigt sein, wobei die Hinterradaufhängung 61 vorzugsweise um eine Hochachse HA drehbar am Hinterrahmenteil 50 gelagert ist, um ein Schwenken des Hinterrads 60 grundsätzlich zu ermöglichen. Die Hochachse HA kann beispielhaft in etwa parallel zur Höhenrichtung h des Lastenrollers verlaufen, und dadurch ein Schwenken des Hinterrads 60 in einer Ebene senkrecht zur Hochachse HA, in etwa aufgespannt durch die Längsrichtung I und die Breitenrichtung b des Lastenrollers 1, ermöglichen.

Der Sicherungsvorsprung 67 ist vorzugsweise an der Radaufhängung 61 angeordnet. Die Hinterradsicherungseinrichtung 62 ist vorzugsweise an dem Hinterrahmenteil 50 rückstellfähig gelagert. Die Hinterradsicherungseinrichtung 62 ist vorzugsweise derart vorgespannt, dass sie bzw. ein an ihr angeordneter Betätigungsabschnitt 64, im langen Zustand des Lastenrollers 1, gegen den die Klappöffnung 56 umgebenden Abschnitt des Hinterrahmenteils 50 drückt und die Klappöffnung 56 verschließt. Das Nutelement 66 kann beispielhaft, wie in Fig. 3 angedeutet, integral an der Hinterradsicherungseinrichtung 62 ausgebildet sein, oder daran fixiert sein, so dass eine Auslenkung des Betätigungsabschnitts 64 der Hinterradsicherungseinrichtung 62, eine Auslenkung des Nutelements 66 der Hinterradsicherungseinrichtung 62 bewirkt. Wie in Fig. 3 angedeutet, kann die Hinterradsicherungseinrichtung 62 rückstellfähig rotierend an dem Hinterrahmenteil 50 gelagert sein, so dass eine rotatorische Auslenkung des Betätigungsabschnitts 64, insbesondere mittels der Hinterradfreigabeeinrichtung 74, welche die Klappöffnung 56 passiert, eine Rotation des Nutelements 66 bewirkt, und einen Eingriff zwischen dem Nutelement 66 und dem Sicherungsvorsprung 67 löst, wodurch die Schwenkbarkeit des Hinterrads 60 freigegeben ist.

Wie in Fig. 3 gezeigt, können der Mittelpunkt des Hinterrads 60 und der Sicherungsvorsprung 67 vorzugsweise derart an der Hinterradaufhängung 61 angeordnet sein, dass sie auf der gleichen Seite bzgl. der Hochachse HA und jeweils beabstandet zur Hochachse HA angeordnet sind. Dies ermöglicht vorteilhaft, dass das Hinterrad 60 bei einer Fahrt rückwärts bzw. nach hinten eine Position einnimmt, in der das Hinterrad 60 eine im wesentlichen gerade Orientierung entlang der Längsrichtung I einnimmt und der Mittelpunkt des Hinterrads 60 gegenüber der Hochachse HA in Längsrichtung I weiter vorne angeordnet ist. Um von der Hinterradfreigabeeinrichtung 74 des Trittbretts 70 auf einfache Weise betätigbar zu sein, ist die Hinterradfreigabeeinrichtung 74 im kurzen Zustand des Lastenrollers 1 ebenfalls in Längsrichtung I weiter vorne angeordnet ist als die Hochachse HA der Hinterradaufhängung 61. Durch diese bevorzugte Anordnung kann die Hinterradsicherungseinrichtung 62 den Sicherungsvorsprung 67 auf sichere Weise, ausgehend von einem kurzen Zustand des Lastenrollers 1 und bei einem Übergang des Lastenrollers 1 in den langen Zustand, greifen.

Dies stellt einen vorteilhaft sicheren und für den Benutzer einfachen Übergang des Lastenrollers 1 von einem kurzen Zustand in einen langen Zustand sicher, wobei der kurze Zustand insbesondere Transportwege ermöglicht, welche in Gebäuden liegen können, beispielsweise durch ein Schieben des Lastenrollers, und der lange Zustand Fahrten bei höheren Geschwindigkeit, wie beispielsweise auf Straßen ermöglicht.

In beispielhaften Ausführungsformen kann der Lastenroller 1 ein Lastenrollersteuerungs- und/oder -regelungssystem umfassen, das es dem Benutzer ermöglicht eine Übergangsroutine zum Übergang des Lastenrollers 1 von dem kurzen Zustand in den langen Zustand auszuführen bzw. ausführen zu lassen, wobei der kurze Zustand verlassen wird und der lange Zustand erreicht wird, indem vorzugsweise das Hinterrad 60 in Fahrtrichtung rückwärts bzw. nach hinten bewegt wird und besonders bevorzugt das Vorderrad 20 bzw. die Vorderräder 20 festgestellt werden, während das Hinterrad 60 in Fahrtrichtung rückwärts bewegt wird.

Wie weiter in Fig. 3 gezeigt, kann ein Hinterradschwenksensor 94 zur Erfassung, ob das Nutelement 66 und der Sicherungsvorsprung 67 in Eingriff sind, an dem Hinterrahmenteil 50 oder bevorzugt an der Hinterradsicherungseinrichtung 62 angeordnet sein. Der Hinterradschwenksensor 94 kann in beispielhaften Ausführungsformen insbesondere ein Näherungssensor sein. Weiter kann der Hinterradschwenksensor insbesondere mit dem Lastenrollersteuerungs- und/oder -regelungssystem verbunden sein, um beispielsweise den Antrieb des Lastenrollers 1 zu begrenzen oder zu verhindern, wenn das Nutelement 66 und der Sicherungsvorsprung 67 nicht in Eingriff sind, um eine instabile Fahrsituation mit einem frei schwenkbaren Hinterrad 60 zu vermeiden.

Wie weiter in Fig. 3 gezeigt, kann das Trittbrett 70, insbesondere an dessen in Längsrichtung I vorderen Ende, mittels eines Gelenkteils 76 des Trittbretts 70, an einer Gelenkaufnahme 16 des Vorderrahmenteils 10 drehbar bzw. schwenkbar angeordnet sein. Das Gelenkteil 76 kann mit der Gelenkaufnahme 16 dabei insbesondere ein Drehen bzw. Schwenken des Trittbretts 70 um eine Querachse ermöglichen, welche im Wesentlichen in Breitenrichtung b des Lastenrollers 1 verläuft.

Wie weiterhin in Fig. 3 gezeigt, kann das Hinterrahmenteil 50 insbesondere eine Ausnehmung für die Hinterradfreigabeeinrichtung 74 aufweisen, welche an dem Trittbrett 70 angeordnet ist, so dass die Hinterradfreigabeeinrichtung 74 in der Ausnehmung Platz findet und bevorzugt durch das Hinterrahmenteil 50 eingehaust ist, wenn das Trittbrett 70 in einer fahrbereiten Position ist.

Die Ausnehmung des Hinterrahmenteils 50 kann abschnittsweise einen Rampenabschnitt 44 bilden, der konfiguriert ist, das Trittbrett 70 beim Hochklappen bzw. Schwenken nach oben zu führen. Der Rampenabschnitt 44 kann darüber hinaus eine Abstützung für die Hinterradfreigabeeinrichtung 74 während des Hochklappens bzw. des Schwenkens des Trittbretts 70 nach oben bilden, und dadurch das Hochklappen bzw. das Schwenken des Trittbretts 70 nach oben für den Benutzer vorteilhaft erleichtern.

Wie in Fig. 3 im in Längsrichtung I hinteren Bereich des Trittbretts 70 angedeutet, können am Hinterrahmenteil 50, unterhalb des Trittbretts 70, einer oder mehrere Trittbrettsensoren 90 angeordnet sein. Der bzw. die Trittbrettsensoren 90 können beispielsweise zumindest einen Gewichtssensor 91 und/oder zumindest einen Näherungssensor umfassen. Der bzw. die Trittbrettsensoren 90 können insbesondere konfiguriert sein einen Belastungszustand sowie zusätzlich oder alternativ einen Entlastungszustand des Trittbretts 70 zu detektieren. Der bzw. die Trittbrettsensoren 90 können insbesondere mit einem Lastenrollersteuerungs- und/oder -regelungssystem verbunden sein, so dass bei Erkennung eines Belastungszustands oder eines Entlastungszustands beispielsweise ein Antrieb des Lastenrollers 1 verhindert, begrenzt oder freigegeben werden kann.

Wie weiterhin in Fig. 3 gezeigt, kann in der Lenkvorrichtung 30, welche vorzugsweise in Längsrichtung I vor dem Trittbrett 70 angeordnet ist, ein Verriegelungselement 38, insbesondere betätigbares Verriegelungselement 38, zumindest abschnittsweise darin aufgenommen sein. Das betätigbare Verriegelungselement 38 kann, wie in Fig. 3 hervorgehoben, im Wesentlichen stabförmig ausgebildet sein. Wie zwar nicht in Fig. 3 gezeigt, kann das Verriegelungsmittels vorzugsweise mittels eines betätigbaren, Hebels, Stifts oder Knaufs, höhenverstellbar an bzw. in der Lenkvorrichtung 30 angeordnet sein.

Das betätigbare Verriegelungselement 38 ist bevorzugt konfiguriert, im langen Zustand und/oder im kurzen Zustand des Lastenrollers 1 in eine Verriegelungsausnehmung 47 einzugreifen und dadurch den Lastenroller 1 im jeweiligen Zustand zu verriegeln bzw. zu fixieren. Das betätigbare Verriegelungselement 38 gelangt dabei vorzugsweise lösbar mit der Verriegelungsausnehmung 47 in Eingriff, wobei der Benutzer vorzugsweise denselben betätigbaren Hebel, Stift oder Knauf, wie zum Verriegeln, verwenden kann.

Das Verriegelungselement 38 kann insbesondere als Stahlstab oder Stahlrohr ausgebildet sein, und bevorzugt zumindest abschnittsweise in der Lenkvorrichtung 30 aufgenommen sein, welche insbesondere als Stahlrohr ausgebildet sein kann.

In bevorzugten Ausführungsformen und wie in Fig. 3 gezeigt, ist die Lenkvorrichtung 30, und damit das Verriegelungselement 38, am Vorderrahmenteil 10 angeordnet bzw. befestigt, so dass zur Verriegelung eines langen bzw. kurzen Zustands des Lastenrollers 1 die Verriegelungsausnehmung 47 vorzugsweise am Hinterrahmenteil 50 angeordnet bzw. ausgebildet ist.

Die Verriegelungsausnehmung 47 kann insbesondere durch ein Verstärkungselement 46 gebildet sein, welches nicht integral mit dem Rahmenteil, an dem die Verriegelungsausnehmung 47 angeordnet ist, ausgebildet ist, sondern insbesondere ein gegenüber dem Rahmenteil festeres Element sein bzw. einen festeren Werkstoff umfassen bzw. aufweisen, wie beispielsweise ein Stahlblech oder ein Edelstahlblech. In beispielhaften Ausführungsformen können das Vorderrahmenteil 10 und das Hinterrahmenteil 50 Stahl oder Aluminium aufweisen bzw. daraus bestehen. Das die Verriegelungsausnehmung 47 aufweisende Verstärkungselement 46 kann ein demgegenüber jeweils festeres Metall, insbesondere Stahl, aufweisen bzw. daraus besehen. Weiter kann das die Verriegelungsausnehmung 47 aufweisende Verstärkungselement 46 eine Führschräge aufweisen, welche ein abruptes Anstoßen des Verriegelungselements 38 an das Verstärkungselement 46 verhindert, insbesondere wenn das höhenverstellbare Verriegelungselement 38 in einer falschen Höhe eingestellt bzw. betätigt ist, so dass dem Verschleiß am Verriegelungselement 38, sowie der damit verbundenen zunehmenden Ungenauigkeit beim Verriegeln des Vorderrahmenteils mit dem Hinterrahmenteil vorteilhaft vorgebeugt wird.

Wie weiter in Fig. 3 gezeigt, kann unterhalb der einen oder der mehreren Verriegelungsausnehmungen 47 jeweils ein Verriegelungssensor 92 zur Erkennung, ob das Verriegelungselement 38 in die Verriegelungsausnehmung 47, an dem jeweiligen Rahmenteil angeordnet sein. Der Verriegelungssensor 92 kann dabei insbesondere ein optischer Sensor oder ein Näherungssensor sein, wobei in Fig. 3 letzterer beispielhaft dargestellt ist. Der Verriegelungssensor 92 zur Erkennung des verriegelnden Eingriffs kann insbesondere mit dem Lastenrollersteuerungs- und/oder -regelungssystem verbunden sein. Dies ermöglicht vorteilhaft, dass in Abhängigkeit davon, ob das Verriegelungselement 38 in eine Verriegelungsausnehmung 47 eingreift, um den kurzen oder den langen Zustand des Lastenrollers 1 zu verriegeln bzw. zu entriegeln, insbesondere ein Antrieb des Lastenrollers 1 verhindert, begrenzt oder freigegeben werden kann.

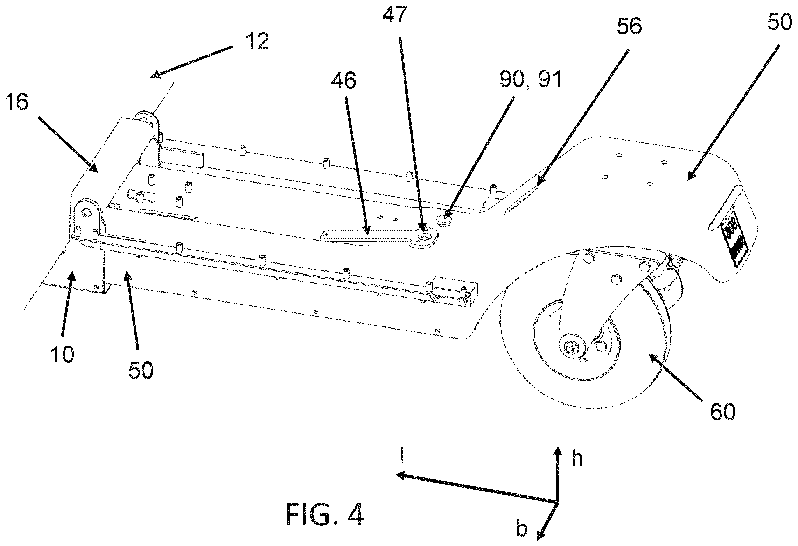

Figur 4 zeigt eine weitere perspektivische Ansicht eines erfindungsgemäßen Lastenrollers 1, wobei das Trittbrett 70 nicht dargestellt ist.

Wie in Fig. 4 gezeigt, ist ein Verstärkungselement 46 an einer Oberseite des Hinterrahmenteils 50 angeordnet und weist die Verriegelungsausnehmung 47 auf, welche konfiguriert ist, mit dem Verriegelungselement 38, welches in Fig. 3 gezeigt ist, in Eingriff zu gelangen. Aus der Zusammenschau der Figuren 3 und 4 wird deutlich, dass die in Fig. 3 und 4 beispielhaft dargestellte Verriegelungsausnehmung 47 und das Verriegelungselement 38 insbesondere dann in Eingriff gelangen können, wenn das Hinterrahmenteil 50 um ein entsprechendes Maß in Längsrichtung I, entlang des Vorderrahmenteils 10, nach vorne geschoben wird. Das Verstärkungselement 46 weist vorzugsweise eine Führschräge auf, so dass das Verstärkungselement 46 vorzugsweise derart geformt ist, dass es der Längsrichtung I folgend eine geringere Höhe, gemessen in Höhenrichtung h, einnimmt. Dadurch kann vorteilhaft, selbst wenn das Verriegelungselement 38 auf eine zu niedrige Höhe eingestellt ist, um in die Verriegelungsausnehmung 47 einzugreifen, das Verriegelungselement 38 entlang der Führschräge geführt werden. Dadurch kann im Weiteren ein Verschleiß bzw. eine Abnutzung am Verriegelungselement 38 sowie am Rahmenteil, an dem die Verriegelungsausnehmung 47 angeordnet ist, verringert bzw. vermieden werden.

Weiter in Fig. 4 ist der Trittbrettsensor 90 zu sehen, welcher beispielsweise ein Gewichtssensor 91 sein kann, jedoch auch ein anderer Sensor, wie beispielsweise ein optischer Sensor, Näherungssensor oder Kontaktsensor sein kann. Der Trittbrettsensor 90 ist insbesondere konfiguriert, einen Belastungszustand und/oder einen Entlastungszustand des Trittbretts 70 zu erkennen bzw. zu detektieren. Vorzugsweise ist der Trittbrettsensor 90 mit dem Lastenrollersteuerungs- und/oder -regelungssystem verbunden. Auf Basis der Detektion eines Belastungszustands oder eines Entlastungszustands kann mittels des Lastenrollersteuerungs- und/oder -regelungssystems beispielsweise ein Antrieb des Lastenrollers verhindert, begrenzt oder freigegeben werden. Weiterhin kann auf Basis der Detektion insbesondere eines Entlastungszustands das Lastenrollersteuerungs- und/oder -regelungssystem beispielsweise eine oder mehrere Radbremsen aktivieren, um eine Geschwindigkeit des Lastenrollers 1 auf Null zu reduzieren, insbesondere nach Absteigen eines Benutzers und/oder eines Beifahrers des Benutzers. Weiterhin kann das Lastenrollersteuerungs- und/oder -regelungssystem konfiguriert sein, vom Benutzer eine bestätigende Eingabe zu fordern, wenn ein Entlastungszustand erkannt wird, um eine oder mehrere Radbremsen zu lösen bzw. zu deaktivieren, um dem Benutzer ein Schieben des Lastenrollers 1 zu ermöglichen.

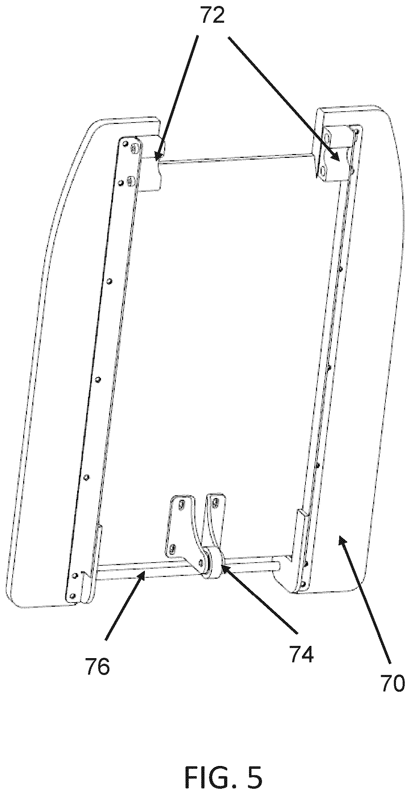

Fig. 5 zeigt ein beispielhaftes Trittbrett 70 eines erfindungsgemäßen Lastenrollers 1. Zu sehen ist dabei im Wesentlichen eine Unterseite des Trittbretts 70. Das dargestellte Trittbrett 70 kann insbesondere im Wesentlichen dem Trittbrett 70 entsprechen, wie es in den Figuren 1 bis 3 im eingebauten Zustand, also an dem Lastenroller 1 angeordnet, gezeigt ist.

Am in Fig. 5 als oberes Ende dargestellten Bereich des Trittbretts 70, weist das Trittbrett 70 einen oder mehrere Festlegungselemente 72 auf, welche insbesondere konfiguriert sind mit Festlegungsgegenelementen 52, welche am Hinterrahmenteil 50 angeordnet sind, in Eingriff zu gelangen, um das Trittbrett 70 in einem fahrbereiten Zustand an dem Hinterrahmenteil 50 lösbar anzuordnen bzw. lösbar zu fixieren.

Die Festlegungselemente 72 sind in Fig. 5 beispielhaft nutförmig ausgebildet, so dass sie konfiguriert sind, jeweils ein Festlegungsgegenelement 52 zumindest abschnittsweise zu umgreifen. Die Festlegungselemente 72 und die Festlegungsgegenelemente 52 sind jedoch nicht auf die dargestellten Formen begrenzt und können jeweils auch die Form des anderen aufweisen.

Die Festlegungselemente 72 können vorzugsweise Hartgummi aufweisen bzw. daraus bestehen, wodurch vorteilhaft eine Klemmwirkung sowie eine Dämpfungswirkung beim Eingriff mit den Festlegungsgegenelementen 52 auftritt bzw. entsteht, welche einerseits eine sichere Fixierung des Trittbretts 70 ermöglicht, und gleichzeitig eine den Benutzer entlastende Wirkung ermöglicht, da Vibrationen hin zum auf das Trittbrett 70 tretenden Benutzer gedämpft werden.

Das Trittbrett 70 kann weiter eine beliebige Vielzahl von Festlegungselementen 72 aufweisen, welche über die zwei in Fig. 5 dargestellten Festlegungselemente 72 hinausgeht, oder nur ein einzelnes Festlegungselement 72 aufweisen.

Am anderen Ende des Trittbretts 70, weist das Trittbrett 70 vorzugsweise ein Gelenkteil 76 auf, welches konfiguriert ist, mit einer Gelenkaufnahme 16, die beispielsweise am Vorderrahmenteil 10 angeordnet sein kann, ein Drehgelenk zu bilden, vorzugsweise mit einer Drehachse in Querrichtung bzw im Wesentlichen in Breitenrichtung b des Lastenrollers 1. In beispielhaften Ausführungsformen und wie in Fig. 5 gezeigt, kann das Gelenkteil 76 im Wesentlichen stabförmig sein.

Wie weiter in Fig. 5 gezeigt, kann das Trittbrett 70 eine Hinterradfreigabeeinrichtung 74 aufweisen, welche insbesondere einen Vorsprung gegenüber einer Unterseite des Trittbretts 70 bildet. Die Hinterradfreigabeeinrichtung 74 ist insbesondere auf der Unterseite des Trittbretts 70 angeordnet, und ist am Trittbrett 70 in der Nähe des Gelenkteils 76 angeordnet. Die Hinterradfreigabeeinrichtung 74 ist insbesondere derart an dem Trittbrett 70 angeordnet, dass die Hinterradfreigabeeinrichtung 74, wenn das Trittbrett 70 in einem hochgeklappten bzw. nach oben geschwenkten Zustand ist, und der Lastenroller 1 weiter in einem kurzen Zustand ist, die Hinterradsicherungseinrichtung 62 auszulenken bzw. derart zu betätigen, dass die Schwenkbarkeit des Hinterrads 60 freigegeben ist. Die Hinterradfreigabeeinrichtung 74, kann dabei insbesondere konfiguriert sein, die in den Figuren 2 und 4 dargestellte Klappöffnung 56 derart zu passieren bzw. zu durchdringen, dass sie einen Betätigungsabschnitt 64 bzw. ein Betätigungsblech der Hinterradsicherungseinrichtung 62 rotatorisch um eine Querachse auslenkt, was eine entsprechende Auslenkung bzw. Rotation eines Nutelement 66 bewirkt, wodurch das Nutelement 66 der Hinterradsicherungseinrichtung 62 und ein mit dem Hinterrad 60 verbundener Sicherungsvorsprung 67 außer Eingriff gelangen, so dass die Schwenkbarkeit des Hinterrads 60 freigegeben ist.

Wie in Fig. 5 verdeutlicht, kann die Hinterradfreigabeeinrichtung 74 insbesondere ein Gleitelement und/oder ein Rollelement aufweisen, wodurch eine besonders schonende bzw. verschleißarme Betätigung der Hinterradsicherungseinrichtung 62 bzw. des Betätigungsabschnitts 64 der Hinterradsicherungseinrichtung 62 ermöglicht wird. Darüber hinaus unterstützt ein Gleitelement und/oder Rollelement vorteilhaft das Hochklappen bzw. nach oben Schwenken des Trittbretts 70, insbesondere durch das Abstützen mittels eines Rampenabschnitts 44 am Hinterrahmenteil 50, indem die für den Benutzer aufzuwendende Kraft verringert wird, und gleichzeitig eine Reibung zwischen der Hinterradfreigabeeinrichtung 74 und dem Hinterrahmenteil 50 verringert bzw. minimiert wird.

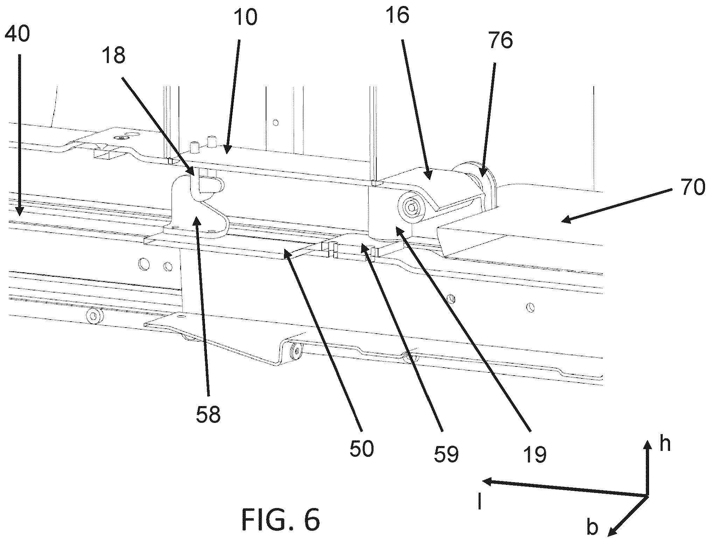

Fig. 6 zeigt eine weitere perspektivische Ansicht einer Schnittdarstellung eines erfindungsgemäßen Lastenrollers 1, wobei der Schnitt im Wesentlichen entlang der Längsrichtung I und der Höhenrichtung h des Lastenrollers 1 verläuft. Fig. 6 stellt dabei beispielhaft den langen Zustand des Lastenrollers 1 dar, wobei das Vorderrahmenteil 10 und das Hinterrahmenteil 50 in einem zueinander maximal ausgezogenen bzw. in Längsrichtung I auseinandergeschobenen Zustand sind.

Wie in Fig. 6 gezeigt, kann das Hinterrahmenteil 50 einen Greifabschnitt 58 aufweisen, welcher eine Nut bzw. Ausnehmung aufweist, die sich entgegen der Längsrichtung I des Lastenrollers 1 vergrößert und in Längsrichtung I des Lastenrollers 1 geschlossen ist. Das Vorderrahmenteil 10 weist bevorzugt einen zum Greifabschnitt 58 des Hinterrahmenteils 50 komplementären greifbaren Abschnitt 18 auf, der konfiguriert ist, von dem Greifabschnitt 58 gegriffen zu werden, insbesondere drehbar gegriffen zu werden.

Indem der Greifabschnitt 58 eine Nut bzw. Ausnehmung aufweist, die sich entgegen der Längsrichtung I des Lastenrollers 1 vergrößert, wird, ein sicheres Greifen des greifbaren Abschnitts 18, bei einer Bewegung des Vorderrahmenteils 10 und des Hinterrahmenteils 50 hin, in den langen Zustand, vorteilhaft erleichtert. Auch erleichtert das drehbare Greifen des greifbaren Abschnitts 18 durch den Greifabschnitt 58, dass sich neben der ersten Stützstelle, gebildet aus Greifabschnitt 58 und greifbarem Abschnitt 18, eine zweite Stützstelle, gebildet aus einem Abstützelement 19 des Vorderrahmenteils 10 und einem Abstützabschnitt 59 des Hinterrahmenteils 59, ohne exakte geometrische Vorgaben, vorteilhaft durch den rotatorischen Freiheitsgrad resultierend aus der ersten Stützstelle, selbst bildet, und ein weiteres Verdrehen des Vorderrahmenteils 10 gegen das Hinterrahmenteil 50 verhindert bzw. blockiert.

Das Abstützelement 19 ist dabei bevorzugt an dem Vorderrahmenteil 10, entgegen der Längsrichtung I des Lastenrollers. 1, beabstandet zu dem greifbaren Abschnitt 18 angeordnet bzw. befestigt. Der Abstützabschnitt 59 ist bevorzugt an dem Hinterrahmenteil 50, entgegen der Längsrichtung I des Lastenrollers 1, beabstandet zum Greifabschnitt 58 angeordnet bzw. befestigt. Folglich bilden die erste Stützstelle, aus Greifabschnitt 58 und greifbarem Abschnitt 18, und die zweite Stützstelle, aus Abstützelement 19 und Abstützabschnitt 59, vorteilhaft zwei in Längsrichtung I zueinander beabstandete Stellen bzw. Stützstellen, durch die ein Einknicken des Lastenrollers 1, insbesondere bei Belastung durch einen Benutzer, vermieden wird, und sich das Vorderrahmenteil 10 und das Hinterrahmenteil 50 darüber hinaus gegenseitig abstützen und versteifen. Um ein gegenseitiges Abstützen sicher zu gewährleisten, sind die beiden beabstandeten Stellen bzw. Stützstellen bevorzugt zumindest etwa 6 cm voneinander beabstandet. Je nach Dimensionierung der Rahmenteil, können auch kleinere Abstände realisiert werden, bewirken jedoch, dass das Vorderrahmenteil 10 und das Hinterrahmenteil 50 eine größere Wandstärke aufweisen müssen, um einen ausreichend steifen Lastenroller 1 bereitzustellen.

Der Greifabschnitt 58 bildet mit dem greifbaren Abschnitt 18 vorzugsweise integral einen Anschlag, der ein maximales Ausziehen bzw. Herausziehen des Hinterrahmenteils 50 aus dem Vorderrahmenteil 10 definiert.

Wie weiter in Fig. 6 gezeigt, können das Vorderrahmenteil 10 und das Hinterrahmenteil 50 insbesondere mittels eines Schienensystem 40 zueinander verschiebbar gelagert sein

### Bezugszeichenliste

- 1: Lastenroller
- 10: Vorderrahmenteil
- 11: Lastenhalterung
- 12: Behälter
- 14: Schloss
- 16: Gelenkaufnahme
- 18: greifbarer Abschnitt
- 19: Abstützelement
- 20: Vorderrad
- 30: Lenkvorrichtung
- 32: Halterung
- 34: Lenker
- 36: Lenkerneigungsverstellung
- 38: Verriegelungselement
- 40: Schienensystem
- 44: Rampenabschnitt
- 46: Verstärkungselement
- 47: Verriegelungsausnehmung
- 50: Hinterrahmenteil
- 52: Festlegungsgegenelement
- 56: Klappöffnung
- 58: Greifabschnitt
- 59: Abstützabschnitt
- 60: Hinterrad
- 61: Hinterradaufhängung
- 62: rückstellfähig auslenkbaren Hinterradsicherungseinrichtung
- 64: Betätigungsabschnitt
- 66: Nutelement
- 67: Sicherungsvorsprung
- 70: Trittbrett
- 72: Festlegungselement
- 74: Hinterradfreigabeeinrichtung
- 76: Gelenkteil
- 80: Sitzvorrichtung
- 90: Trittbrettsensor
- 91: Gewichtssensor
- 92: Verriegelungssensor
- 94: Hinterradschwenksensor
- HA: Hochachse
- b: Breitenrichtung
- h: Höhenrichtung
- I: Längsrichtung

## Patentansprüche

1. Elektrisch antreibbarer Lastenroller (1), umfassend:
- eine Vorderachse mit zumindest einem Vorderrad (20), wobei die Vorderachse an einem Vorderrahmenteil (20) angeordnet ist;
- eine Hinterachse mit zumindest einem Hinterrad (60), wobei die Hinterachse an einem Hinterrahmenteil (50) angeordnet ist;
-- wobei der Lastenroller (1) einen kurzen Zustand aufweist, in dem eines von dem Hinterrahmenteil (50) und dem Vorderrahmenteil (10) zumindest abschnittsweise in dem anderen von dem Hinterrahmenteil (50) und dem Vorderrahmenteil (10) angeordnet ist; und
- ein Trittbrett (70);
**dadurch gekennzeichnet, dass**
-- das Trittbrett (70) eine Hinterradfreigabeeinrichtung (74) aufweist, welche konfiguriert ist, im kurzen Zustand des Lastenrollers (1) eine Schwenkbarkeit des zumindest einen Hinterrads (60) freizugeben.

2. Elektrisch antreibbarer Lastenroller (1) nach Anspruch 1, wobei das Hinterrahmenteil (50) eine rückstellfähig auslenkbare Hinterradsicherungseinrichtung (62) aufweist, welche das zumindest eine Hinterrad (62) in einem langen Zustand des Lastenrollers (1) gegen ein Verschwenken sichert.

3. Elektrisch antreibbarer Lastenroller (1) nach Anspruch 2, wobei das Trittbrett (70) im kurzen Zustand des Lastenrollers (1) gegenüber dem langen Zustand des Lastenrollers (1) verschwenkt ist, und
wobei die Hinterradfreigabeeinrichtung (74) des Trittbretts (70) im kurzen Zustand des Lastenrollers (1) konfiguriert ist, die rückstellfähig auslenkbare Hinterradsicherungseinrichtung (62) auszulenken, um die Schwenkbarkeit des Hinterrads (60) freizugeben.

4. Elektrisch antreibbarer Lastenroller (1) nach einem der Ansprüche 2 oder 3, wobei die rückstellfähige auslenkbare Hinterradsicherungseinrichtung (62) ein rückstellfähig klappbares Nutelement (66) aufweist,
wobei ein Sicherungsvorsprung (67) an dem zumindest einen Hinterrad (60) angeordnet ist, und
wobei im langen Zustand des Lastenrollers (1) der Sicherungsvorsprung (67) zumindest abschnittsweise in das rückstellfähig klappbare Nutelement (66) eingreift.

5. Elektrisch antreibbarer Lastenroller (1) nach Anspruch 4, wobei ein Hinterradschwenksensor (94) im Bereich des rückstellfähig klappbaren Nutelements (66) angeordnet ist und konfiguriert ist, ein zumindest abschnittsweises Eingreifen des Sicherungsvorsprungs (67) zu detektieren und/oder ein Nicht-Eingreifen des Sicherungsvorsprungs (67) zu detektieren.

6. Elektrisch antreibbarer Lastenroller (1) nach einem der Ansprüche 2 bis 5, wobei das Hinterrahmenteil (50) eine Klappöffnung (56) aufweist, welche im langen Zustand des Lastenrollers (1) durch einen Betätigungsabschnitt (64) der rückstellfähig auslenkbaren Hinterradsicherungseinrichtung (62) verschlossen ist.

7. Elektrisch antreibbarer Lastenroller (1) nach einem der Ansprüche 2 bis 6, wobei das Trittbrett (70) zumindest ein Festlegungselement (72) aufweist, welches konfiguriert ist, mit zumindest einem Festlegungsgegenelement (52) des Hinterrahmenteils (50) in Eingriff zu gelangen und den langen Zustand des Lastenrollers (1) zu sichern.

8. Elektrisch antreibbarer Lastenroller (1), umfassend:
- eine Vorderachse mit zumindest einem Vorderrad (20), wobei die Vorderachse an einem Vorderrahmenteil (10) angeordnet ist, und wobei das zumindest eine Vorderrad (20) schwenkbar an dem Vorderrahmenteil (10) angeordnet ist;
- eine Hinterachse mit zumindest einem Hinterrad (60), wobei die Hinterachse an einem Hinterrahmenteil (50) angeordnet ist;
-- wobei der Lastenroller einen kurzen Zustand aufweist, in dem eines von dem Hinterrahmenteil (50) und dem Vorderrahmenteil (10) zumindest abschnittsweise in dem anderen von dem Hinterrahmenteil (50) und dem Vorderrahmenteil (10) angeordnet ist;
**dadurch gekennzeichnet, dass**
-- im kurzen Zustand des Lastenrollers (1) die Schwenkbarkeit des zumindest einen Vorderrads (20) eingeschränkt ist, insbesondere blockiert ist, bevorzugt mechanisch blockiert ist.

9. Elektrisch antreibbarer Lastenroller (1) nach Anspruch 8, wobei die Schwenkbarkeit des zumindest einen Vorderrads (20) im kurzen Zustand des Lastenrollers (1) auf einen Bereich von etwa 0° bis etwa 5° eingeschränkt ist,
bevorzugt auf einen Bereich von etwa 0° bis etwa 2° eingeschränkt ist und besonders bevorzugt vollständig blockiert ist.

10. Elektrisch antreibbarer Lastenroller (1) nach einem der vorangehenden Ansprüche, ferner umfassend:
- einen Trittbrettsensor (90), welcher konfiguriert ist ein Signal in einem Belastungszustand des Trittbretts (70) abzugeben und/oder ein Signal in einem Entlastungszustand des Trittbretts (70) abzugeben; und
- ein Lastenrollersteuerungs- und/oder -regelungssystem, welches mit dem Trittbrettsensor (90) verbunden ist;
-- wobei das Lastenrollersteuerungs- und/oder -regelungssystem konfiguriert ist, einen Antrieb des Lastenrollers (1) an den Belastungszustand bzw. Entlastungszustand anzupassen.

11. Elektrisch antreibbarer Lastenroller (1) nach Anspruch 10, wobei der Trittbrettsensor (90) einen Gewichtssensor (91) umfasst, welcher ab und/oder unterhalb eines vorbestimmten Gewichts, den Belastungszustand bzw. den Entlastungszustand des Trittbretts (70) erkennt, und/oder
wobei der Trittbrettsensor (90) einen Näherungssensor umfasst, welcher bei einer vorbestimmten Näherungsposition des Trittbretts (70) und/oder in Abwesenheit einer vorbestimmten Näherungsposition, resultierend aus einer Belastung bzw. Entlastung des Trittbretts (70), den Belastungszustand bzw. den Entlastungszustand des Trittbretts (70) erkennt.

12. Elektrisch antreibbarer Lastenroller (1) nach einem der vorangehenden Ansprüche, ferner umfassend eine Lastenhalterung (11),
wobei die Lastenhalterung (11) bevorzugt vor einem Lenker (34) angeordnet ist, und
wobei die Lastenhalterung (11) konfiguriert ist wechselbar eine Lastenbox und/oder eine Fahrgastzelle zu halten.

13. Elektrisch antreibbarer Lastenroller (1) nach einem der vorangehenden Ansprüche, ferner umfassend ein betätigbares Verriegelungselement (38), welches konfiguriert ist, das Vorderrahmenteil (10) und das Hinterrahmenteil (50) in einem kurzen Zustand und/oder in einem langen Zustand des Lastenrollers (1) zueinander lösbar zu verriegeln.

14. Elektrisch antreibbarer Lastenroller (1) nach einem der vorangehenden Ansprüche, wobei das Trittbrett (70) in einem kurzen Zustand des Lastenrollers (1) im Wesentlichen vertikal verschwenkt gehalten ist, und/oder
in einem langen Zustand des Lastenrollers (1) im Wesentlichen horizontal gehalten ist,
wobei das Trittbrett (70) bevorzugt magnetisch in dem kurzen Zustand und/oder in dem langen Zustand gehalten ist.

15. Elektrisch antreibbarer Lastenroller (1) nach einem der vorangehenden Ansprüche, umfassend eine Sitzvorrichtung (80), wobei die Sitzvorrichtung (80) vorzugsweise
ein höhenverstellbares Sitzelement und/oder
ein gegenüber einer Längsrichtung (I) des Lastenrollers (1) neigbares Sitzelement aufweist.

## Claims

1. An electrically drivable cargo scooter (1), comprising:
- a front axle with at least one front wheel (20), wherein the front axle is arranged on a front frame part (20);
- a rear axle with at least one rear wheel (60), wherein the rear axle is arranged on a rear frame part (50),
- wherein the cargo scooter (1) has a short state in which one of the rear frame part (50) and the front frame part (10) is arranged at least in portions in the other of the rear frame part (50) and the front frame part (10); and
- a footboard (70);
**characterized in that**
- the footboard (70) has a rear wheel enabling apparatus (74) which is configured to enable a pivotability of the at least one rear wheel (60) in the short state of the cargo scooter (1).

2. The electrically drivable cargo scooter (1) according to claim 1, wherein the rear frame part (50) has a resettably deflectable rear wheel securing apparatus (62), which secures the at least one rear wheel (62) to prevent it from pivoting in a long state of the cargo scooter (1).

3. The electrically drivable cargo scooter (1) according to claim 2, wherein the footboard (70) is pivoted in the short state of the cargo scooter (1) compared to the long state of the cargo scooter (1), and
wherein, in the short state of the cargo scooter (1), the rear wheel enabling apparatus (74) of the footboard (70) is configured to deflect the resettably deflectable rear wheel securing apparatus (62) in order to enable the pivotability of the rear wheel (60).

4. The electrically drivable cargo scooter (1) according to one of claims 2 or 3, wherein the resettably deflectable rear wheel securing apparatus (62) has a resettably foldable groove element (66),
wherein a securing projection (67) is arranged on the at least one rear wheel (60), and
wherein, in the long state of the cargo scooter (1), the securing projection (67) engages at least in portions in the resettably foldable groove element (66).

5. The electrically drivable cargo scooter (1) according to claim 4, wherein a rear wheel pivot sensor (94) is arranged in the region of the resettably foldable groove element (66) and is configured to detect when the securing projection (67) engages at least in portions and/or to detect when the securing projection (67) does not engage.

6. The electrically drivable cargo scooter (1) according to one of claims 2 to 5, wherein the rear frame part (50) has a flap opening (56) which is closed in the long state of the cargo scooter (1) by an actuation portion (64) of the resettably deflectable rear wheel securing apparatus (62).

7. The electrically drivable cargo scooter (1) according to one of claims 2 to 6, wherein the footboard (70) has at least one fixing element (72) which is configured to engage with at least one fixing counter-element (52) of the rear frame part (50) and to secure the long state of the cargo scooter (1).

8. An electrically drivable cargo scooter (1), comprising:
- a front axle with at least one front wheel (20), wherein the front axle is arranged on a front frame part (10), and wherein the at least one front wheel (20) is arranged so as to be pivotable on the front frame part (10);
- a rear axle with at least one rear wheel (60), wherein the rear axle is arranged on a rear frame part (50),
- wherein the cargo scooter has a short state in which one of the rear frame part (50) and the front frame part (10) is arranged at least in portions in the other of the rear frame part (50) and the front frame part (10);
**characterized in that**
- in the short state of the cargo scooter (1), the pivotability of the at least one front wheel (20) is restricted, in particular is blocked, preferably is mechanically blocked.

9. The electrically drivable cargo scooter (1) according to claim 8, wherein, in the short state of the cargo scooter (1), the pivotability of the at least one front wheel (20) is restricted to a range of approximately 0° to approximately 5°, is restricted preferably to a range of approximately 0° to approximately 2°, and is particularly preferably completely blocked.

10. The electrically drivable cargo scooter (1) according to one of the preceding claims, further comprising:
- a footboard sensor (90) which is configured to emit a signal in a loaded state of the footboard (70) and/or to emit a signal in an unloaded state of the footboard (70); and
- a cargo scooter control system which is connected to the footboard sensor (90);
- wherein the cargo scooter control system is configured to adapt a drive of the cargo scooter (1) to the loaded state or, respectively, unloaded state.

11. The electrically drivable cargo scooter (1) according to claim 10, wherein the footboard sensor (90) comprises a weight sensor (91) which recognizes the loaded state or, respectively, the unloaded state of the footboard (70) starting from and/or below a predetermined weight, and/or
wherein the footboard sensor (90) comprises a proximity sensor which recognizes the loaded state or, respectively, the unloaded state of the footboard (70) at a predetermined proximity position of the footboard (70) and/or in the absence of a predetermined proximity position, resulting from the footboard (70) being under load or, respectively, relieved of load.

12. The electrically drivable cargo scooter (1) according to one of the preceding claims, further comprising a cargo holder (11),
wherein the cargo holder (11) is arranged preferably in front of a handlebar (34), and
wherein the cargo holder (11) is configured to exchangeably hold a cargo box and/or a passenger compartment.

13. The electrically drivable cargo scooter (1) according to one of the preceding claims, further comprising an actuatable locking element (38) which is configured to releasably lock together the front frame part (10) and the rear frame part (50) in a short state and/or in a long state of the cargo scooter (1).

14. The electrically drivable cargo scooter (1) according to one of the preceding claims, wherein the footboard (70) is held substantially vertically pivoted in a short state of the cargo scooter (1), and/or
is held substantially horizontally in a long state of the cargo scooter (1),
wherein the footboard (70) is held preferably magnetically in the short state and/or in the long state.

15. The electrically drivable cargo scooter (1) according to one of the preceding claims, comprising a seat device (80), wherein the seat device (80) has preferably
a height-adjustable seat element and/or
a seat element that can be tilted relative to a longitudinal direction (1) of the cargo scooter (1).

## Revendications

1. Trottinette cargo (1) pouvant être entraînée électriquement, comprenant :
- un essieu avant avec au moins une roue avant (20), l'essieu avant étant agencé sur une partie de châssis avant (20) ;
- un essieu arrière avec au moins une roue arrière (60), l'essieu arrière étant agencé sur une partie de châssis arrière (50) ;
-- la trottinette (1) présentant un état court dans lequel l'une parmi la partie de châssis arrière (50) et avant (10) est disposée au moins par sections dans l'autre parmi la partie de châssis arrière (50) et avant (10) ; et
- un plateau (70) ;
**caractérisée en ce que**
-- le plateau (70) comporte un dispositif de libération de roue arrière (74) qui est configuré pour libérer, dans l'état court de la trottinette cargo (1), la possibilité de pivotement de ladite au moins une roue arrière (60).

2. Trottinette cargo (1) pouvant être entraînée électriquement d'après la revendication 1, sachant que la partie de châssis arrière (50) comporte un dispositif de retenue de roue arrière (*Hinterradsicherungseinrichtung*) (62) pouvant être actionné ou encore dévie de manière réversible, qui empêche la ou les roues arrière (62) de pivoter lorsque la trottinette cargo (1) est en position allongée.

3. Trottinette cargo (1) pouvant être entraînée électriquement d'après la revendication 2, sachant que dans la position courte de la trottinette cargo (1) le plateau (70) est pivoté par rapport à la position longue de la trottinette cargo (1), et
sachant que le dispositif de libération de roue arrière (74) du plateau (70) est configuré, dans la position courte de la trottinette cargo (1), pour actionner ou encore dévier (*auslenken*) le dispositif de retenue de roue arrière (62) pouvant être actionné ou encore dévie de manière réversible afin de libérer la possibilité de pivotement de la roue arrière (60).

4. Trottinette cargo (1) pouvant être entraînée électriquement d'après l'une des revendications 2 ou 3, sachant que le dispositif de retenue de roue arrière (62) pouvant être actionné ou encore dévie de manière réversible comporte un élément rainuré (66) rabattable de manière réversible,
sachant qu'un ergot de retenue (67) est agencé sur ladite au moins une roue arrière (60), et
sachant que, dans l'état long de la trottinette cargo (1), l'ergot de retenue (67) s'engage au moins par sections dans l'élément rainuré rabattable de manière réversible (66).

5. Trottinette cargo (1) pouvant être entraînée électriquement d'après la revendication 4, sachant qu'un capteur de pivotement de roue arrière (94) est agencé dans la zone de l'élément rainuré (66) rabattable de manière réversible et est configuré pour détecter un engagement au moins par sections de l'ergot de retenue (67) et/ou pour détecter une absence d'engagement de l'ergot de retenue (67).

6. Trottinette cargo (1) pouvant être entraînée électriquement d'après l'une des revendications de 2 à 5, sachant que la partie de châssis arrière (50) présente une ouverture rabattable (56) qui, dans l'état long de la trottinette cargo (1), est fermée par une portion d'actionnement (64) du dispositif de retenue de roue arrière (62) pouvant être actionné ou encore dévie de manière réversible.

7. Trottinette cargo (1) pouvant être entraînée électriquement d'après l'une des revendications de 2 à 6, le plateau (70) comportant au moins un élément de fixation (72) qui est configuré pour s'engager avec au moins un élément de fixation complémentaire (52) de la partie de châssis arrière (50) et pour assurer l'état long du chariot (1).

8. Trottinette cargo (1) pouvant être entraînée électriquement, comprenant :
- un essieu avant avec au moins une roue avant (20), sachant que l'essieu avant est agencé sur une partie de châssis avant (10), et sachant que ladite au moins une roue avant (20) est agencée de manière pivotante sur la partie de châssis avant (10) ;
- un essieu arrière avec au moins une roue arrière (60), sachant que l'essieu arrière est disposé sur une partie de châssis arrière (50) ;
-- sachant que la trottinette cargo présente un état court dans lequel l'une parmi la partie de châssis arrière (50) et la partie de châssis avant (10) est disposée au moins par sections dans l'autre parmi la partie de châssis arrière (50) et la partie de châssis avant (10) ;
**caractérisée en ce que**
-- dans l'état court de la trottinette cargo (1), la possibilité de pivotement de ladite au moins une roue avant (20) est limitée, notamment bloquée, de préférence bloquée mécaniquement.

9. Trottinette cargo (1) pouvant être entraînée électriquement d'après la revendication 8, la possibilité de pivotement de ladite au moins une roue avant (20), à l'état court de la trottinette cargo (1), étant limitée à une plage d'environ 0° à environ 5°,
de préférence étant limitée à une plage d'environ 0° à environ 2° et,
de manière particulièrement préférée, étant complètement bloquée.

10. Trottinette cargo (1) pouvant être entraînée électriquement d'après l'une des revendications précédentes, comprenant en outre :
- un capteur de plateau (90) qui est configuré pour émettre un signal dans un état de charge du plateau (70) et/ou pour émettre un signal dans un état de décharge du plateau (70) ; et
- un système de commande et/ou de régulation de la trottinette cargo, qui est relié au capteur de plateau (90) ;
-- sachant que le système de commande et/ou de régulation de la trottinette cargo est configuré pour adapter un entraînement de la trottinette cargo (1) à l'état de charge ou de décharge.

11. Trottinette cargo (1) pouvant être entraînée électriquement d'après la revendication 10, sachant que le capteur de plateau (90) comprend un capteur de poids (91) qui détecte l'état de charge ou de décharge du plateau (70) à partir d'un poids prédéfini et/ou en dessous de celui-ci, et/ou
sachant que le capteur de plateau (90) comprend un capteur de proximité qui détecte à une position de proximité prédéterminée du plateau (70) et/ou en l'absence d'une position de proximité prédéterminée résultant d'une charge ou d'une décharge du plateau (70), l'état de charge ou de décharge du plateau (70).

12. Trottinette cargo (1) pouvant être entraînée électriquement d'après l'une des revendications précédentes, comprenant en outre un support de charge (11),
sachant que le support de charge (11) est de préférence disposé devant un guidon (34) et
sachant que le support cargo (11) est configuré pour maintenir de manière interchangeable une caisse de chargement et/ou une cellule passager.

13. Trottinette cargo (1) pouvant être entraînée électriquement d'après l'une des revendications précédentes, comprenant en outre un élément de verrouillage (38) actionnable qui est configuré pour verrouiller de manière libérable la partie de châssis avant (10) et la partie de châssis arrière (50) l'une par rapport à l'autre dans un état court et/ou dans un état long de la trottinette cargo (1).

14. Trottinette cargo (1) pouvant être entraînée électriquement d'après l'une des revendications précédentes, sachant que le plateau (70) dans un état court de la trottinette cargo (1) est maintenu en position pivotée essentiellement verticale, et/ou que
dans un état long de la trottinette cargo (1) il est maintenu en position pivotée essentiellement horizontale,
sachant que le plateau (70) est maintenu de préférence magnétiquement dans la position courte et/ou dans la position longue.

15. Trottinette cargo (1) pouvant être entraînée électriquement d'après l'une des revendications précédentes, comprenant un dispositif de siège (80), sachant que le dispositif de siège (80) comprend de préférence
un élément de siège réglable en hauteur et/ou
un élément de siège inclinable par rapport à une direction longitudinale (I) de la trottinette cargo (1).
